(19) **Europäisches Patentamt / European Patent Office / Office européen des brevets**

(11) **EP 4 787 456 A1**

(12) # EUROPEAN PATENT APPLICATION

(43) Date of publication:
05.08.2026 Bulletin 2026/32

(21) Application number: 26155992.6

(22) Date of filing: 03.02.2026

(51) International Patent Classification (IPC):
$H01M\ 4/133^{(2010.01)}$  $H01M\ 4/36^{(2006.01)}$
$H01M\ 4/587^{(2010.01)}$  $H01M\ 4/134^{(2010.01)}$
$H01M\ 4/38^{(2006.01)}$

(52) Cooperative Patent Classification (CPC):
H01M 4/133; H01M 4/134; H01M 4/364;
H01M 4/366; H01M 4/386; H01M 4/587

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 04.02.2025 KR 20250013912
04.02.2025 KR 20250013913
04.02.2025 KR 20250013914

(71) Applicant: SAMSUNG SDI CO., LTD.
Yongin-si, Gyeonggi-do 17084 (KR)

(72) Inventors:
• Moon, Joong Ho
Gyeonggi-do, Suwon-si 16678 (KR)
• Kwon, Seung Uk
Gyeonggi-do, Suwon-si 16678 (KR)
• Youm, Chul
Gyeonggi-do, Suwon-si 16678 (KR)
• Lee, Eun Joo
Gyeonggi-do, Suwon-si 16678 (KR)
• Nah, Jae Hou
Gyeonggi-do, Suwon-si 16678 (KR)
• Park, Sun Il
Gyeonggi-do, Suwon-si 16678 (KR)
• Shin, Chang Su
Gyeonggi-do, Suwon-si 16678 (KR)
• Kim, Deok Hyun
Gyeonggi-do, Suwon-si 16678 (KR)

(74) Representative: Meissner Bolte Partnerschaft
mbB
Patentanwälte Rechtsanwälte
Postfach 86 06 24
81633 München (DE)

(54) **NEGATIVE ELECTRODE ACTIVE MATERIAL FOR RECHARGEABLE LITHIUM BATTERY, NEGATIVE ELECTRODE FOR RECHARGEABLE LITHIUM BATTERY AND RECHARGEABLE LITHIUM BATTERY**

(57) The present disclosure relates to a negative electrode active material for a rechargeable lithium battery, a negative electrode for a rechargeable lithium battery including the negative electrode active material, and a rechargeable lithium battery including the negative electrode. The negative electrode active material includes spherical graphite and an amorphous carbon layer around (e.g., surrounding) the spherical graphite, and the negative electrode active material has a volume ratio of the total volume of pores with a diameter of 100 nm to 1000 nm to a total pore volume of 3% or less and an orientation ratio of 90 or less.

FIG. 1

## Description

## CROSS-REFERENCE TO RELATED APPLICATIONS

The present application claims priority to and the benefit of Korean Patent Application No.10-2025-0013912, filed on February 4, 2025, Korean Patent Application No.10-2025-0013913, filed on February 4, 2025, and Korean Patent Application No.10-2025-0013914, filed on February 4, 2025, in the Korean Intellectual Property Office, the entire disclosure of each of which is incorporated herein by reference.

## BACKGROUND

### 1. Field

The present invention relates to a negative electrode active material for a rechargeable lithium battery, a negative electrode for a rechargeable lithium battery including the same, and a rechargeable lithium battery including the same.

### 2. Description of the Related Art

Recently, with the rapid spread of electronic devices, such as mobile phones, notebook computers, and/or electric vehicles, that use batteries, the demand for secondary batteries with high energy density and high capacity has increased significantly. Accordingly, research and development for improving the performance of such secondary batteries, particularly rechargeable lithium batteries, has been actively conducted.

A rechargeable lithium battery generally includes a positive electrode and a negative electrode, each of which contain an active material capable of the intercalation and deintercalation of lithium ions. Electric energy is generated by oxidation and reduction reactions when the lithium ions are intercalated into and deintercalated from the positive electrode and the negative electrode. For example, the electrical energy is generated when lithium ions are intercalated into the positive electrode and/or deintercalated from the negative electrode during the discharge process.

Generally, an electrode plate for a rechargeable lithium battery is manufactured by a wet method using a solvent, such as water or N-methylpyrrolidone. Alternatively, an electrode plate for a rechargeable lithium battery may also be manufactured by a dry method without using a solvent.

The dry method may include several detailed processes, such as a process of mixing an active material, a binder, and/or the like, without a solvent, a process of fiberizing the binder and kneading the active material, and a process of pulverizing an electrode dough prepared by the kneading process. It is desirable that the active material has excellent or suitable dispersibility and crack resistance during the kneading and pulverization processes.

## SUMMARY

The present invention concerns a negative electrode active material for a rechargeable lithium battery that is free from cracking, crumbling, or damage during a manufacturing process of a negative electrode.

In a further aspect the present invention concerns a negative electrode for a rechargeable lithium battery, which includes the negative electrode active material for a rechargeable lithium battery that is free from cracking, crumbling, or damage during the manufacture of a negative electrode.

In a further aspect the present invention concerns a negative electrode for a rechargeable lithium battery that may be manufactured at low pressure during roll-pressing due to low spring-back after roll-pressing.

In a further aspect the present invention concerns a negative electrode for a rechargeable lithium battery with low expansion and excellent or suitable lifespan characteristics.

In a further aspect the present invention concerns a negative electrode for a rechargeable lithium battery that includes the negative electrode active material, and a rechargeable lithium battery including the same.

Additional aspects will be set forth in part in the description which follows and, in part, will be apparent from the description, or may be learned by practice of the presented embodiments of the invention.

Specifically, the present invention concerns a negative electrode active material for a rechargeable lithium battery comprising: spherical graphite (e.g., in a form of particles); and an amorphous carbon layer around (e.g., surrounding) the spherical graphite, wherein the negative electrode active material has a volume ratio of a total volume of pores with a diameter of about 100 nanometers (nm) to about 1000 nm to a total pore volume (e.g., total pore volume of the negative electrode active material) of about 3% or less and an orientation ratio of about 90 or less.

According to an embodiment the total pore volume is a total volume of total pores, the total pores being open pores comprised in the negative electrode active material, and each having a diameter in a range of 10 nm to 6000 nm, and wherein the pores with a diameter of 100 nm to 1000 nm are open pores with a diameter of 100 nm to 1000 nm in the negative electrode active material.

The total pore volume may be 0.5 mL/g or less, and the total volume of the pores with a diameter of 100 nm to 1000 nm may be 0.015 mL/g or less.

The negative electrode active material can have a sphericity (S) of 0.8 to 1.0, as expressed by Equation 2:

## Equation 2

$$\text{Sphericity (S)} = 4\pi \times A/B^2,$$

In Equation 2,

A being a projected area of the negative-electrode active-material particle, and B being a projected perimeter of the negative-electrode active-material particle.

The spherical graphite can comprise natural graphite and/or the spherical graphite can comprise secondary particles in each of which a plurality of primary particles of natural graphite are assembled, and wherein some of spaces surrounded by the primary particles of the negative electrode active material are filled with amorphous carbon.

The primary particles can have an average particle diameter (D50) in a range of 1 $\mu$m to 15 $\mu$m, and the secondary particles can have an average particle diameter (D50) in a range of 5 $\mu$m to 30 $\mu$m.

The amorphous carbon layer may have a thickness of 1 nm to 2 $\mu$m and/or the spherical graphite and amorphous carbon in the negative electrode active material can be in a weight ratio of 90 : 10 to 99 : 1 based on a total of 100 parts by weight and/or the negative electrode active material can have a specific surface area of 3 m2/g or less.

In another aspect the present invention concerns a negative electrode for a rechargeable lithium battery includes the negative electrode active material for a rechargeable lithium battery.

Specifically, the present invention concerns a negative electrode, comprising a negative electrode active material layer comprising a first negative electrode active material, wherein the first negative electrode active material comprises the negative electrode active material according to the invention.

According to one or more embodiments of the present disclosure, a negative electrode for a rechargeable lithium battery includes a negative electrode active material, wherein the negative electrode active material may include a mixture of a first negative electrode active material and a second negative electrode active material. The first negative electrode active material preferably includes spherical graphite (e.g., in a form of particles), and an amorphous carbon layer around (e.g., surrounding) the spherical graphite, and has a volume ratio of a total volume of pores with a diameter in a range of about 100 nm to about 1000 nm to a total pore volume of the first negative electrode active material of about 3% or less, the orientation ratio of the first negative electrode active material is about 90 or less, and the second negative electrode active material preferably includes one or more selected from among (i) and (ii):

(i) a negative electrode active material that includes silicon nanoparticles and amorphous carbon and has an internal pore fraction of about 1% or less; and
(ii) a negative electrode active material that includes silicon nanoparticles and an amorphous carbon coating layer on (e.g., arranged on) a surface of each of the silicon nanoparticles, and has an aspect ratio of about 0.85 or more.

The (i) negative electrode active material may have a specific surface area of 10 m2/g or less and a sphericity of 0.7 or more, and wherein the (i) negative electrode active material may comprise secondary particles in each of which the silicon nanoparticles are assembled, wherein preferably the amorphous carbon covers a surface of the secondary particle.

The (ii) negative electrode active material may have a sphericity of 0.9 or more, an average particle diameter (D50) of 5 $\mu$m to 10 $\mu$m, and a tap density of 1.0 g/cc or more.

In a further aspect the present invention concerns a rechargeable lithium battery includes: the negative electrode for a rechargeable lithium battery; and a positive electrode.

The negative electrode active material for a rechargeable battery according to one or more embodiments is preferably free from cracking, crumbling, and damage during the manufacture of a dry negative electrode, thereby achieving the high manufacturing efficiency and battery efficiency of the dry negative electrode.

Although the negative electrode for a rechargeable lithium battery according to one or more embodiments can include natural graphite, the high manufacturing efficiency and battery efficiency of the negative electrode are achieved.

For example, one or more embodiments provide a negative-electrode active material and electrodes specifically engineered for dry-process manufacturability and high battery efficiency. In particular, controlling the fraction of open pores having a diameter of about 100 nm to about 1000 nm to about 3% or less (expressed as a dimensionless percentage of the mercury-intrusion-porosimetry-measured total open-pore volume) together with an orientation ratio (I(002)/I(110)) of about 90 or less, in spherical graphite having an amorphous carbon layer, yields dry-electrode films with reduced spring-back during roll-pressing, decreased cracking or crumbling during kneading and pulverization, shortened electrolyte impregnation time, and increased initial efficiency. In one or more embodiments, the first negative-electrode active material exhibits a sphericity of about 0.8 to about 1.0, a total open-pore volume of about 0.5 mL/g or less, and-for further suppression of the targeted pore fraction-a 100-1000 nm open-pore volume of about 0.015 mL/g or less. The first active material may be utilized alone or in a mixture with a second negative-electrode active material (e.g., a silicon-carbon composite), wherein the mixture proportion of the first and second active materials may be about 20 wt% to about 80 wt% for each, based on a total weight of 100 wt% of the mixture. The second active material may, in one or more embodiments, have an internal pore fraction of about 1% or less or, in one or more embodiments, include silicon nanoparticles with an amorphous carbon coating layer and exhibit an aspect ratio of about 0.85 or more (with exemplary sphericity of about 0.9 or more, D50 of about 5 $\mu$m to about 10 $\mu$m, and tap density of about 1.0 g/cc or more). The negative-electrode active material layer may further include a binder such as polytetrafluoroethylene and/or polyvinylidene fluoride and may be fabricated by a dry method without solvent; the resulting negative electrodes are compatible with related art positive-electrode chemistries, separators, and electrolytes and may be implemented in cylindrical, prismatic, pouch, and/or coin-type rechargeable lithium batteries. The negative electrode active material layer may comprise 80 wt% to 99.5 wt% of the negative electrode active material and 0.5 wt% to 20 wt% of the binder, based on a total weight of 100 wt% of the negative electrode active material layer. The negative electrode may be a dry negative electrode.

## BRIEF DESCRIPTION OF THE DRAWINGS

The accompanying drawings are included to provide a further understanding of the disclosure, and are incorporated in and constitute a part of this disclosure. The drawings illustrate example embodiments of the disclosure and, together with the description, serve to explain principles of the disclosure. The above and other objects, features, and advantages of the present disclosure will become more apparent to those of ordinary skill in the art by describing example embodiments thereof in more detail with reference to the accompanying drawings, in which:

FIG. 1 is a graph showing an incremental pore volume (Y axis (vertical axis), incremental pore volume, units: mL/g) according to a pore diameter (X axis (horizontal axis), pore diameter, units: micrometer ($\mu$m)) for each of a negative electrode active material according to one or more embodiments of the present disclosure and natural graphite, and in FIG. 1, the solid line represents the result for the negative electrode active material according to one or more embodiments of present disclosure, whereas the dotted line represents the result for natural graphite;
FIGS. 2 - 5 are each a cross-sectional view that schematically illustrates a rechargeable lithium battery according to one or more embodiments of the present disclosure;
FIG. 6 is a scanning electron microscope (SEM) image of the negative electrode active material of Example 1 of the present disclosure; and
FIG. 7 is an SEM image of a negative electrode active material of Comparative Example 1 of the present disclosure.

## DETAILED DESCRIPTION

Hereinafter, one or more embodiments of the present disclosure will be described in more detail with reference to the accompanying drawings. However, these embodiments are presented as examples, and the present disclosure are not limited thereto, and the present disclosure is only defined by the scope of the appended claims and equivalents thereof.

Unless otherwise specified herein, if (e.g., when) a part such as a layer, a film, an area, a plate, and/or the like, is said to be "on" another part, it includes not only embodiments in which it is "directly on" the other part, but also embodiments in which one or more intervening parts are present therebetween. In contrast, when a part such as a layer, a film, an area, or a plate is described as being "directly on" another part, there is no intervening part present therebetween.

Unless otherwise specified herein, the singular may also include the plural. For example, the singular forms "a," "an," "one," and "the" are intended to include the plural forms as well, unless the context clearly indicates otherwise. In addition, unless otherwise specified, "A or B," or "A and/or B," or "A/B" may refer to "including A," "including B," or "including A and B." Expressions such as "at least one of," "one of," and "selected from," when preceding a list of elements, modify the entire list of elements and do not modify the individual elements of the list. For example, "at least one of a, b or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. Further, the utilization of "may" when describing embodiments of the present disclosure refers to "one or more embodiments of the present disclosure."

In this disclosure, "a combination thereof" may refer to a mixture, a laminate, a composite, a copolymer, an alloy, a blend, and/or a reaction product of the components.

Unless otherwise defined herein, the particle size/diameter may be an average particle size/diameter. In one or more embodiments, the particle size/diameter may refer to an average size size/diameter (D50), which is an average size/diameter of particles with a cumulative volume of 50 vol% in a particle size distribution. The average particle size/diameter (D50) may be measured by a well-suitable method to those skilled in the art, for example, using a particle size analyzer, a transmission electron micrograph, or a scanning electron micrograph. In one or more embodiments, the average particle size may be measured using a measurement device using dynamic light scattering, and an average particle size/diameter (D50) value may be obtained by performing data analysis, counting the number of particles in each particle size range, and then calculating the D50 value therefrom. In one or more embodiments, the average particle size/diameter may be measured using a laser diffraction method. When measuring the average particle size/diameter by the laser diffraction method, for example, the average particle size (D50) may be calculated based on 50 volume% of the particle size distribution after dispersing target particles in a dispersion medium, introducing the particles into a commercially available laser diffraction particle size measuring device (such as MT 3000 from Microtrac), and irradiating the particles with ultrasonic waves of about 28 kHz at an output of 60 W.

In the present disclosure, if (e.g., when) the particle is spherical, the size may refer to a diameter. If (e.g., when) the particle is non-spherical, the "size" indicates a major axis length or an average major axis length.

In the disclosure, the "diameter" of a pore may refer to the longest diameter of a pore.

The "longest diameter of a pore" may refer to the diameter of a pore if (e.g., when) the cross-section of a pore is circular. The "longest diameter of a pore" may refer to the length of the longest side of the cross-section of a pore if (e.g., when) the cross-section of a pore is not circular.

The "longest diameter of a pore" may be obtained by measuring the cross-section of a negative electrode active material by image analysis through SEM, Barrett-Joyner-Halenda (BJH) analysis, or mercury intrusion porosimetry (MIP).

**Negative electrode active material for rechargeable lithium battery**

As a lithium intercalating negative electrode active material (hereinafter, referred to as a negative electrode active material) is densified, it is desirable that there is no cracking, crumbling, or damage to a dry negative electrode particularly during the manufacture of the negative electrode, which may significantly increase its manufacturing efficiency and battery efficiency. The process of manufacturing a dry negative electrode may include (e.g., essentially include) the mixing, kneading, and pulverizing of the negative electrode active material, without using a solvent.

According to one or more embodiments of the present disclosure, a negative electrode active material may include: spherical graphite (e.g., in a form of particles); and an amorphous carbon layer around (e.g., surrounding) the spherical graphite. The negative electrode active material may have a volume ratio of a total volume of pores with a diameter of about 100 nm to about 1000 nm to a total pore volume of the negative electrode active material of about 3% or less, and the negative electrode active material has an orientation ratio of about 90 or less.

The total pore includes only open pores, excluding closed pores, among the pores included in the negative electrode active material. The total pore volume may be a total volume of open pores formed in the negative electrode active material regardless of their diameters.

The pores with a diameter of about 100 nm to about 1000 nm may be pores (e.g., open pores with a diameter of 100 nm to 1000 nm) included in the negative electrode active material. When the pores with a diameter of about 100 nm to about 1000 nm fall within the above diameter range, there is no limitation to their forms.

In one or more embodiments, the total pores included in the negative electrode active material may have a diameter distribution of about 10 nm to about 6000 nm.

The volume ratio is a ratio of the total volume of pores with a diameter of about 100 nm to about 1000 nm to the total pore volume included in the negative electrode active material.

According to one or more embodiments, the total pore volume may be about 0.5 mL/g or less, e.g., about 0.1 mL/g to about 0.5 mL/g, about 0.3 mL/g to about 0.5 mL/g, which may be measured by MIP.

According to one or more embodiments, the total volume of pores with a diameter of about 100 nm to about 1000 nm may be about 0.07 mL/g or less, for example, about 0.01 mL/g to about 0.07mL/g, about 0.03 mL/g to about 0.06 mL/g, which may be measured by MIP. In one or more embodiments, the total volume of pores with a diameter of about 100 nm to about 1000 nm may be about 0.015 mL/g or less.

In one or more embodiments, the volume ratio may be obtained by dividing the total volume of pores with a diameter of about 100 nm to about 1000 nm by the total pore volume of the negative electrode active material determined by the apparent density of the negative electrode active material and the true density of graphite (about 2.2 g/cc). The true density may be measured by a method suitable to those of ordinary skill in the art. For example, the true density may be measured using a method based on Archimedes' principle or a gas pycnometer. For example, in one or more embodiments, the true density may be measured for 1.0 g of the negative electrode active material(graphite) using a Micromeritics AccuPyc II 1340 pycnometer through a gas method with helium gas. In one or more embodiments, the volume ratio may be obtained by dividing the total volume of pores with a diameter of about 100 nm to about 1000 nm by the total pore volume of the negative electrode active material. The total volume of pores with a diameter of about 100 nm to about 1000 nm and the total pore volume of the negative electrode active material may be measured by a method suitable to those of ordinary skill in the art. For example, The total volume of pores with a diameter of about 100 nm to about 1000 nm may be measured using a method based on mercury intrusion porosimetry, for example, utilizing a Hg intrusion porosimeter (AutoPore V (Micromeritics)), and the total pore volume of the negative electrode active material may be obtained from the apparent density of the negative electrode active material and the true density of graphite. For example, in one or more embodiments, the volume ratio (%) may be defined as (V_{100-1000 nm})/(V_{total open pores}) $\times$ 100%, where both V_{100-1000 nm} and V_{total open pores} are measured by mercury intrusion porosimetry (MIP) on the negative-electrode active material. The total pore volume refers to the total volume of open pores (closed pores excluded).

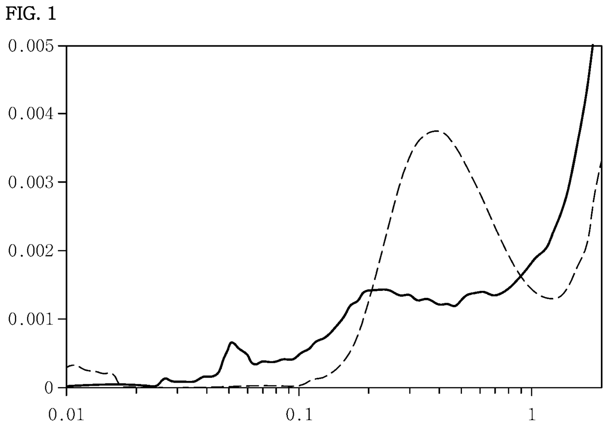

The volume ratio of pores with a diameter of about 100 nm to about 1000 nm in the negative electrode active material is considered. This will be described with reference to FIG. 1.

FIG. 1 is a graph showing incremental pore volumes (Y axis (vertical axis), incremental pore volume, units: mL/g) according to a pore diameter (X axis (horizontal axis), pore diameter, units: $\mu$m) for the negative electrode active material according to one or more embodiments of the present disclosure and natural graphite.

Referring to FIG. 1, it can be confirmed that the pore distributions of the negative electrode active material according to one or more embodiments and natural graphite are significantly different in the pore sizes with a diameter of about 100 nm to about 1000 nm.

As shown in the following experimental examples, it was confirmed that the negative electrode active material of one or more embodiments exhibited the high manufacturing efficiency and battery efficiency of a dry negative electrode when it underwent substantially the same process of manufacturing a dry negative electrode as the natural graphite. Therefore, it was demonstrated that the volume ratio of the total volume of pores with a diameter of about 100 nm to about 1000 nm, for example, about 300 nm to about 1000 nm, or for example, about 400 nm to about 1000 nm can affect the manufacture of a dry negative electrode.

According to one or more embodiments, the negative electrode active material may have a volume ratio of the total volume of pores with a diameter of about 300 nm to about 1000 nm to the total pore volume of about 3% or less.

According to one or more embodiments, the negative electrode active material may have a volume ratio of the total volume of pores with a diameter of about 400 nm to about 1000 nm to the total pore volume of 3% or less.

According to one or more embodiments, the volume ratio may be more than 0% and about 3% or less, about 1%, about 1.1%, about 1.2%, about 1.3%, about 1.4%, about 1.5%, about 1.6%, about 1.7%, about 1.8%, about 1.9%, about 2%, about 2.1%, about 2.2%, about 2.3%, about 2.4%, about 2.5%, about 2.6%, about 2.7%, about 2.8%, about 2.9%, about 3%, about 1% to about 3%, about 1% to about 2.5%, or about 2% to about 3%.

The negative electrode active material has an orientation ratio of about 90 or less. Within the above orientation ratio range, the negative electrode active material in the dry negative electrode may be oriented at a certain angle relative to a current collector, allowing easier movement of lithium ions during charging and discharging and a decrease in electrolyte migration resistance in the negative electrode. Therefore, the efficiency of the dry negative electrode, for example, its initial efficiency may increase, and the electrolyte impregnation time of the negative electrode active material may be shortened even after the rolling process in the manufacturing of the dry negative electrode.

According to one or more embodiments, the orientation ratio may be about 50, about 51, about 52, about 53, about 54, about 55, about 56, about 57, about 58, about 59, about 60, 61, about 62, 63, about 64, about 65, about 66, about 67, about 68, about 69, about 70, about 71, about 72, about 73, about 74, about 75, about 76, about 77, about 78, about 79, about 80, about 81, about 82, about 83, about 84, about 85, about 86, about 87, about 88, about 89, about 90, about 50 to about 80, about 60 to about 80, or about 70 to about 80. When the orientation ratio ranges from about 50 to about 80, in the roll-pressing process in the manufacturing of the dry negative electrode, the increasing degree of compaction of the negative electrode active material may increase the energy density of a battery.

According to one or more embodiments, the orientation ratio may be calculated by the following Equation 1:

## Equation 1

$$\text{Orientation ratio} = I(002))/I(110).$$

In Equation 1,

I(110) is a peak intensity of the (110) plane in XRD (x ray diffraction) measurement of the negative electrode active material; and
I(002) is a peak intensity of the (002) plane in XRD measurement of the negative electrode active material.

According to one or more embodiments, the XRD measurement is performed using CuK$\alpha$ radiation as a target radiation. The orientation ratio may be computed as I(002)/I(110) using XRD with CuK$\alpha$ radiation; pelletization and scan settings may follow standard practice.

Even if (e.g., when) the negative electrode active material is included in a dry negative electrode plate, XRD measurement may provide substantially the same peak intensity. For example, in one or more embodiments, the XRD measurement for the dry negative electrode plate also includes the negative electrode active material having an orientation degree of 90 or less.

The negative electrode active material is spherical (e.g., substantially spherical), which may be easily dispersed throughout the negative electrode, thereby reducing an expansion rate during charging and discharging. In one or more embodiments, if (e.g., when) the negative electrode active material is used in combination with crystalline carbon, the spherical negative electrode active material may be better inserted into spaces within the crystalline carbon, which leads to better dispersion throughout the negative electrode.

According to one or more embodiments, the negative electrode active material may have a sphericity (S) of 0.8 to 1.0, as expressed by Equation 2, which indicates that it is spherical:

## Equation 2

$$\text{Sphericity (S)} = 4\pi \times A/B^2.$$

In Equation 2,

A is an area (e.g., a projection area) of the negative electrode active material (e.g., negative electrode active material particle), and

B is a perimeter (e.g., a projection perimeter) of the negative electrode active material (e.g., negative electrode active material particle).

For example, A being the projected (2D) area of the negative-electrode active-material particle obtained from CP-SEM/ImageJ, and B being the projected (2D) perimeter of the negative-electrode active-material particle.

According to one or more embodiments, B may be a perimeter of the actual shape (e.g., actual projection shape) of the negative electrode active material.

The sphericity of the negative electrode active material may be a value obtained if (e.g., when) projecting a three-dimensional particle onto a two-dimensional plane. For example, the sphericity may be a ratio of the outline of a real particle and the outline of the circle with the same area as the real one.

The area A indicates the area of a circle with a circumference, which is the same as the actual perimeter B of a particle that has been obtained through an SEM image of an electrode cross-section using a controlled pressure scanning electron microscope (CP-SEM) and calculating the actual perimeter of the particle from the cross-sectional image through the Image J program. In one or more embodiments, the actual perimeter may refer not only to the perimeter when the particle has a perfectly spherical shape, but also the length obtained along the perimeter even if (e.g., when) the particle is not perfectly spherical and has uneven regions.

According to one or more embodiments, the sphericity of the negative electrode active material may be about 0.8 to about 0.99, about 0.92 to about 0.98, or about 0.92 to about 0.95. Within the above range, efficiency during charging and discharging may increase, and cracking and crumbling may be significantly reduced during the manufacture of the dry electrode plate.

In one or more embodiments, the spherical graphite may be secondary particles in which a plurality of primary particles of natural graphite are assembled.

The primary particles may have an average particle diameter (D50) of about 1 $\mu$m to about 15 $\mu$m. When assembled within the above particle diameter range, the formation of internal pores may be reduced. According to one or more embodiments, the primary particles may have an average particle diameter of about 1 $\mu$m, about 2 $\mu$m, about 3 $\mu$m, about 4 $\mu$m, about 5 $\mu$m, about 6 $\mu$m, about 7 $\mu$m, about 8 $\mu$m, about 9 $\mu$m, about 10 $\mu$m, about 11 $\mu$m, about 12 $\mu$m, about 13 $\mu$m, about 14 $\mu$m, about 15 $\mu$m, about 1 $\mu$m to about 13 $\mu$m, or about 5 $\mu$m to about 10 $\mu$m.

The secondary particles may have an average particle diameter (D50) of about 5 $\mu$m to about 30 $\mu$m. Within the above particle diameter range, cracking and crumbling of the negative electrode active material may be reduced in the kneading and pulverizing processes in the manufacture of the dry electrode plate. According to one or more embodiments, the secondary particles may have an average particle diameter of about 5 $\mu$m, about 6 $\mu$m, about 7 $\mu$m, about 8 $\mu$m, about 9 $\mu$m, about 10 $\mu$m, about 11 $\mu$m, about 12 $\mu$m, about 13 $\mu$m, about 14 $\mu$m, about 15 $\mu$m, about 16 $\mu$m, about 17 $\mu$m, about 18 $\mu$m, about 19 $\mu$m, about 20 $\mu$m, about 21 $\mu$m, about 22 $\mu$m, about 23 $\mu$m, about 24 $\mu$m, about 25 $\mu$m, about 26 $\mu$m, about 27 $\mu$m, about 28 $\mu$m, about 29 $\mu$m, about 30 $\mu$m, about 10 $\mu$m to about 15 $\mu$m, or about 10 $\mu$m to about 20 $\mu$m.

The number of primary particles constituting the secondary particle is not particularly limited as long as they can form the secondary particle. For example, in one or more embodiments, the number of primary particles may be 2 to 50, 2 to 30, or 2 to 10.

The natural graphite may be graphite with a major axis and a minor axis. A length of the major axis may be about 5 $\mu$m to about 15 $\mu$m. Within this range, the graphite may be randomly oriented, the number of lithium-ion transport channels may be increased, thereby improving rate characteristics, and due to suitable edges, efficiency may be appropriately or suitably maintained.

In the amorphous carbon-containing layer (e.g., in the amorphous carbon layer), the amorphous carbon may be soft carbon, hard carbon, mesophase pitch carbon, calcined coke, or a combination thereof.

A thickness of the amorphous carbon layer may be about 1 nm to about 2 μm, about 1 nm to about 500 nm, about 10 nm to about 300 nm, or about 20 nm to 200 about nm. Within the above range, the degree of cracking or crumbling during the manufacturing of the dry electrode plate may be reduced, thereby increasing the efficiency of manufacturing the dry electrode plate.

According to one or more embodiments, some of the spaces surrounded by the primary particles of the negative electrode active material may be filled with amorphous carbon. This may be achieved by carbonizing an amorphous carbon precursor following easy infiltration of the amorphous carbon precursor into the pores formed inside the secondary assembled particles by compression molding. This may further reduce the above-described volume ratio of the pores.

According to one or more embodiments, based on 100 parts by weight of the total weight of spherical graphite and amorphous carbon in the negative electrode active material, the spherical graphite and the amorphous carbon may be included at a weight ratio of about 90 : 10 to 99 : 1, for example, about 90 : 10, about 91 : 9, about 92 : 8, about 93 : 7, about 94 : 6, about 95 : 5, about 96 : 4, about 97 : 3, about 98 : 2, about 99 : 1, about 93 : 7 to 95 : 5. Within this range, side reactions with an electrolyte may be reduced, and rate characteristics may be further improved.

The negative electrode active material according to one or more embodiments may have a small specific surface area, that is, a small Brunauer-Emmett-Teller (BET) specific surface area. The specific surface area of the negative electrode active material may be about 3 $m^2/g$ or less, for example, about 0.5 $m^2/g$ to about 3 $m^2/g$, about 0.8 $m^2/g$ to about 3 $m^2/g$, about 0.8 $m^2/g$ to about 1.5 $m^2/g$, or about 2 $m^2/g$ to about 3 $m^2/g$.

The negative electrode active material may be prepared by the following process.

The primary particles may be assembled as secondary particles by a spheroidization process using a spheroidizing device. The spheroidization process may be performed by inputting the primary particles into the spheroidizing device and rotating an inner container. The spheroidization process may prepare secondary particles in each of which natural graphite primary particles are assembled and which include internal pores therein.

A mixture is prepared by mixing the secondary particles and an amorphous carbon precursor.

The amorphous carbon precursor may be included at about 10 wt% or less, for example, more than about 1 wt% and about 8 wt% or less, or about 5 to about 7 wt% of the mixture. Within the above range, there may be an optimal or suitable effect on the internal density and initial efficiency of the negative electrode active material.

The amorphous carbon precursor is not particularly limited as long as it is a material that may be carbonized. In one or more embodiments, the amorphous carbon precursor may include one or more selected from among synthetic pitch, petroleum-based pitch, and coal-based pitch.

Afterward, the mixture is subjected to compression molding.

The compression molding may further reduce the volume ratio of the total volume of pores with a diameter of about 100 nm to about 1000 nm by increasing the extent to which the amorphous carbon precursor infiltrates the pores in the secondary particles, and inhibit or reduce side reactions between the negative electrode active material and an electrolyte.

The compression molding may be performed at a pressure that may maintain the sphericity of the obtained product, particularly, the final product, such as the negative electrode active material. The pressure may be, for example, greater than 0 MPa and about 100 MPa or less, greater than about 30 MPa (e.g., at least about 30 MPa) and about 90 MPa or less (e.g., at most about 90 MPa), or about 50 MPa to about 80 MPa. Within the above pressure range, the porosity may be reduced while maintaining the spherical shape of the negative electrode active material, without generating fine particles.

According to one or more embodiments, the compression molding may be performed through cold isostatic pressing (CIP).

The amorphous carbon precursor may be converted into an amorphous carbon layer by thermal treatment of the compression-molded article. Because the compression molding is performed through CIP, it may be easy to prepare a negative electrode active material that satisfies the above-mentioned pore volume ratio.

The thermal treatment may be performed at a temperature of about 1000 °C to about 1500 °C, for example, about 1100 °C to about 1400 °C, about 1100 °C to about 1300 °C, or about 1200 °C to about 1300 °C. The thermal treatment may be performed for about 1 hour to about 20 hours, for example, about 10 hours to about 18 hours, about 14 hours to about 17 hours, or about 14 hours to about 16 hours. Within the above range, by converting not only the amorphous carbon precursor on the surface of the compression-molded article but also the amorphous carbon precursor that has infiltrated into the pores inside the secondary particles into amorphous carbon, the volume ratio of the total volume of pores with a diameter of about 100 nm to about 1000 nm to the total pore volume of the negative electrode active material may be further lowered.

The thermal treatment may carbonize the amorphous carbon precursor, which may be performed in a nitrogen atmosphere, helium atmosphere, or a combination thereof.

**Negative electrode for rechargeable lithium battery**

The negative electrode for a rechargeable lithium battery may include a negative electrode active material layer, which may include the negative electrode active material described above.

Accordingly, the negative electrode may include a negative electrode active material that satisfies the above volume ratio and the above orientation ratio, allowing easier movement of lithium ions during charging and discharging and a decrease in electrolyte migration resistance in the negative electrode. In addition, the negative electrode may include a negative electrode active material that satisfies the above volume ratio, thereby increasing the manufacturing efficiency of a negative electrode. For example, compared to a wet negative electrode manufactured by a process employing a solvent, a dry negative electrode may be manufactured by a process involving the grinding of the negative electrode active material without a solvent, and the negative electrode active material may be free from cracking, crumbling, and damage by satisfying the above volume ratio, thereby significantly increasing the manufacturing efficiency of the dry negative electrode.

In one or more embodiments, the above-described negative electrode active material among the total negative electrode active material in the negative electrode active material layer may be included at about 95 wt% or more, for example, about 95 wt% to 100 wt% or 100 wt%. For example, In one or more embodiments, the above-described negative electrode active material among all of negative electrode active materials in the negative electrode active material layer may be included at 95 wt% or more, for example, about 95 wt% to 100 wt% or 100 wt% based on a total weight of all of the negative electrode active materials.

In one or more embodiments, the negative electrode active material layer may further include a different negative electrode active material from the above-described negative electrode active material, in addition to the above-described negative electrode active material. For convenience of description, the negative electrode active material according to one or more embodiments is referred to as a first negative electrode active material in the disclosure.

In one or more embodiments, the negative electrode active material layer may further include a second negative electrode active material.

The negative electrode active material layer includes a mixture (e.g., negative electrode active material mixture) of a first negative electrode active material and a second negative electrode active material.

The second negative electrode active material may include one or more selected from among (i) and (ii):

(i) a negative electrode active material (also referred to as second negative electrode active material (i)) that includes silicon nanoparticles and amorphous carbon, and has an internal pore fraction of about 1% or less; and
(ii) a negative electrode active material (also referred to as second negative electrode active material (ii)) that includes silicon nanoparticles and amorphous carbon coating layer on (e.g., arranged on) a surface of each of the silicon nanoparticles, and has an aspect ratio of about 0.85 or more.

**When the second negative electrode active material being the** (i) **negative electrode active material**

In one or more embodiments, the negative electrode active material mixture includes the first negative electrode active material and the second negative electrode active material (i) (i.e., the (i) negative electrode active material). For convenience of description, in this section, the second negative electrode active material (i) may simply be referred as the second negative electrode active material.

Because the negative electrode active material layer includes the mixture, the manufacturing efficiency and battery efficiency of the negative electrode may be significantly improved. For example, the mixture may significantly improve the manufacturing efficiency and battery efficiency of a dry negative electrode. The process of manufacturing a dry negative electrode may not include (e.g., may exclude) a solvent but may include (e.g., essentially include) mixing, kneading, and grinding of the negative electrode active materials.

In one or more embodiments, the mixture may be included at about 95 wt% or more, for example, about 95 wt% to 100 wt%, about 99 wt% to 100 wt%, or 100 wt% of the total negative electrode active material in the negative electrode active material layer. Within the above range, it may be easy to achieve the effects of the above-described negative electrode.

In one or more embodiments, the negative electrode active material, for example, the mixture, may be included at about 90 wt% to about 99 wt% of a total weight of the negative electrode active material layer. Within the above range, a capacity improvement effect may be exhibited.

In one or more embodiments, the first negative electrode active material of the mixture may be included at about 20 wt% to about 80 wt%, for example, about 20 wt% to about 60 wt%, and the second negative electrode active material may be included at about 20 wt% to about 80 wt%, for example, about 40 wt% to about 80 wt%, based on the total weight of the negative electrode active material layer. Within the above ranges, the battery efficiency of the negative electrode described above may be high.

The second negative electrode active material is a silicon-carbon composite (e.g., in a form of particles), which includes silicon nanoparticles and amorphous carbon.

In one or more embodiments, the second negative electrode active material has an internal pore fraction of about 1% or less. Within this internal pore fraction range, if (e.g., when) a dry negative electrode plate is manufactured in combination with the first negative electrode active material, high electrode plate manufacturing efficiency and high battery efficiency may be exhibited. For example, the internal pore fraction of the second negative electrode active material may be greater than 0% and about 1% or less, for example, about 0.1% to about 1%, about 0.2% to about 1%, or about 0.3% to about 1%.

The "internal pore fraction" as used herein refers to a volume ratio of open pores, excluding closed pores, included in the second negative electrode active material based on a total pore volume of the second negative electrode active material. The "internal pore fraction" may be measured by the BJH method.

The specific surface area (for example BET specific surface area) of the second negative electrode active material may be about 10 $m^2$/g or less, for example, about 0.5 $m^2$/g to about 10 $m^2$/g. Within the above range, by reducing the contact of the second negative electrode active material with an electrolyte, side reactions may be inhibited or reduced, which may help to improve performance and also increase initial efficiency.

A sphericity of the second negative electrode active material may be about 0.7 or more. Within the above range, the surface area of the second negative electrode active material may be reduced, thereby reducing an area where the second negative electrode active material comes in contact with an electrolyte or reacts with lithium. Therefore, side reactions with the electrolyte may be reduced, the reaction with lithium may also be reduced, and volume expansion may also be reduced due to substantially uniform expansion of the second negative electrode active material in the negative electrode. For example, in one or more embodiments, the sphericity of the second negative electrode active material may be about 0.7 to about 1.0. The sphericity may be measured according to Equation 2.

In the second negative electrode active material, the silicon nanoparticles are primary particles, which may be included in the silicon-carbon composite in the form of secondary particles in each of which primary particles, that is, at least one primary particle is assembled. Therefore, the silicon-carbon composite may include secondary particles in each of which silicon nanoparticles are assembled.

The silicon nanoparticles may be flaky or spherical, but embodiments of the present disclosure are not limited thereto. In addition, secondary particles in each of which at least one primary particle is assembled may be spherical.

The amorphous carbon may be arranged to cover the surface of the secondary particle. For example, the second negative electrode active material according to one or more embodiments may include a core containing silicon nanoparticles, for example, may include a secondary particle core in which at least one primary particle as silicon nanoparticles is assembled, and amorphous carbon around (e.g., surrounding) the core. In one or more embodiments, the core refers to a region located in the second negative electrode active material. Because the core is surrounded by amorphous carbon, it refers to a region that is virtually not exposed to the outside. Accordingly, the core may be regarded as a region located inside the amorphous carbon that surrounds it.

The amorphous carbon may be filled between the primary particles to cover the surface of each of the primary particles. Likewise, the amorphous carbon filled between the primary particles may reduce the pore volume of the negative electrode active material, thereby inhibiting side reactions with an electrolyte, and if (e.g., when) the primary particles, which are silicon nanoparticles, expand, may serve to fill the space between the particles. In addition, as the amorphous carbon filled between the primary particles serves as a binder, the negative electrode active material particles are prevented or reduced from fracturing, thereby improving conductivity.

The amorphous carbon may be soft carbon, hard carbon, mesophase pitch carbide, calcined coke, or a combination thereof.

In one or more embodiments, the silicon nanoparticles may be flaky. For example, the silicon nanoparticles may each be flake-shaped with a major axis and a minor axis. Here, the major axis/minor axis ratio, for example, width/thickness, of the silicon particles may range from about 5 to 20. When the major axis/minor axis ratio of the silicon particle falls within the above range, the expansion of the silicon nanoparticles may be reduced, thereby improving the initial efficiency and lifespan characteristics of a battery containing the active material.

A particle diameter of the silicon nanoparticles may be about 10 nm to about 200 nm. The particle diameter may be an average particle diameter of the particles. Here, the average particle diameter may refer to a particle diameter (D50) measured by the cumulative volume. The particle diameter (D50) refers to, unless defined otherwise in the disclosure, the diameter of a particle at which the cumulative volume in a particle size distribution is 50 vol%. When the size of the silicon nanoparticles falls within the above range, the side reactions between the negative electrode active material and an electrolyte may be inhibited or reduced, and the expansion of the silicon nanoparticles may be reduced, thereby improving the initial efficiency and lifespan characteristics of the battery.

When the second negative electrode active material is a secondary particle in which at least two primary particles are assembled, the particle diameter of the secondary particle may be about 2 $\mu$m to about 15 $\mu$m, or about 5 $\mu$m to about 10 $\mu$m. In addition, the particle diameter of the primary particle may be about 10 nm to about 200 nm. If (e.g., when) the average particle diameter of the second negative electrode active material falls within the above ranges, lithium ions may easily diffuse into the negative electrode active material, and electrical resistance and rate characteristics may be improved.

The full width at half maximum (FWHM)(111) of the diffraction peak on the (111) plane of the silicon particles as measured by X-ray diffraction using CuK$\alpha$ radiation may be about 0.3° to about 7°. If (e.g., when) the FWHM(111) of the silicon particles falls within the above range, the lifespan characteristics of the battery may be improved.

The X-ray diffraction measurement is performed using CuK$\alpha$ radiation as target radiation, and here, the measurement conditions include $2\theta$=40° to 50°, a scan speed (°/S) of 0.04 to 0.06, and a step size (°/step) of 0.01 to 0.03.

A mixing ratio of the silicon nanoparticles and the amorphous carbon may be about 80 : 20 to about 20 : 80 or about 70 : 30 to about 50 : 50 (weight ratio) based on a total of 100 parts by weight of the silicon nanoparticles and the amorphous carbon. In one or more embodiments, the silicon nanoparticles are assembled into secondary particles, which are present in the second negative electrode active material. As a result, the mixing ratio of the silicon nanoparticles and the amorphous carbon may also be regarded as the mixing ratio of the secondary particles and the amorphous carbon. If (e.g., when) the mixing ratio of the silicon nanoparticles and the amorphous carbon falls within the above range, there may be an advantage of achieving superior capacity, particularly, a higher capacity compared to a crystalline carbon negative electrode active material.

The amorphous carbon may be present as a coating layer that coats the surface of the secondary particle, and in addition to this coating layer form, the amorphous carbon may also be filled between the primary particles. Regardless of whether the amorphous carbon is filled between the primary particles, present as a coating layer, or present in any other form, the total content (e.g., amount) of the amorphous carbon contained in the second negative electrode active material may be about 20 wt% to about 80 wt% with respect to a total weight of 100 wt% of the second negative electrode active material.

If (e.g., when) the amorphous carbon is present as a coating layer that coats or surrounds the surface of the secondary particle, the amorphous carbon may be present on the surface of the secondary particle at a thickness of about 1 nm to about 1000 nm, for example, about 30 nm to about 200 nm. If (e.g., when) the thickness of the amorphous carbon layer falls within the above range, the conductivity of the second negative electrode active material may be further improved, and the contact with the electrolyte may be reduced, thereby effectively inhibiting increased resistance due to the generation of side reaction products.

The particle diameter of the second negative electrode active material may be about 40 $\mu$m or less, for example, about 2 $\mu$m to about 15 $\mu$m. If (e.g., when) the particle diameter of the second negative electrode active material falls within the above range, lithium ions may easily diffuse into the negative electrode active material, which may improve the resistance and rate characteristics of a battery.

The second negative electrode active material according to one or more embodiments may be prepared through the following process.

First, silicon particles are prepared. These silicon particles may be nanoparticles having a particle diameter of about 10 nm to about 200 nm. These nanoparticle silicon particles may be obtained by performing a process of producing nanoparticles, such as a grinding process. The FWHM(111) of the diffraction peak on the (111) plane of the silicon nanoparticles as measured by X-ray diffraction using CuK$\alpha$ radiation may be about 0.3° to about 7°.

A silicon particle solution is prepared by dispersing the silicon particles in a solvent. As the solvent, any alcohol that does not oxidize the silicon particles and is easily volatized may be suitably used, for example, in one or more embodiments, isopropyl alcohol, ethanol, methanol, butanol, or a combination thereof may be used. The concentration of the silicon particle dispersion is set to about 10 wt% to about 30 wt%.

The prepared silicon particle solution is spray-dried. According to the above-described process, nanometer-scale silicon particles (primary particles) are assembled to prepare micrometer-scale spherical secondary silicon particles. The secondary particles may include internal pores, that is, gaps between the primary particles. According to the spray drying process, the sphericity of the negative electrode active material may be adjusted by adjusting a nozzle type (kind) and/or an atmosphere. For example, as the nozzle, it is appropriate or suitable to use a two-fluid nozzle that can form fine particles by mixing a two-phase fluid consisting of a liquid and gas. When the two-fluid nozzle is used, fine spherical particles may be formed, and because the formed particle size is small, an additional grinding process is not needed or required, allowing the spherical shape to be maintained. If (e.g., when) a disk-type (kind) nozzle that sprays while rotating is used, large particles are formed, and due to the large-sized particles, an additional grinding process is needed and the particles are formed in various shapes, such as a spherical, elliptical, or donut-like shape. Therefore, this type (kind) of nozzle is not suitable for the present disclosure.

In addition, the spray drying process is suitable if (e.g., when) being performed under an $N_2$ atmosphere, for example, while flowing (or blowing) $N_2$ at a flow rate of about 30 L/min to about 50 L/min, about 40L/min to about 50 L/min, or about 30L/min to about 40 L/min. If (e.g., when) the flow rate of $N_2$ during the spray drying process falls within the above range, spherical microparticles with an appropriate or suitable size may be formed. When the flow of $N_2$ is smaller than 30 L/min, the sprayed products may aggregate, which is not suitable due to the increased size of the particles. When the flow rate is greater than 50 L/min, there may be a problem where the resulting particle size is too small and a large amount of fine particles is generated.

The spray drying process may be performed at about 120 °C to 170 °C. If (e.g., when) the spray drying process is performed within the above temperature range, the temperature is sufficiently higher than the boiling point of the solvent, and thus is suitable because micro-scale spherical silicon particles are sufficiently dried through rapid volatilization.

The micrometer-scale secondary silicon particles each in a spherical form, in which the obtained silicon primary particles are assembled, are mixed with an amorphous carbon precursor. Here, a mixing ratio of the secondary particles and the amorphous carbon precursor may be about 80 : 20 to about 20 : 80, or about 60 : 40 to about 50 : 50 (weight ratio) based on a total of 100 parts by weight of the secondary particles and the amorphous carbon precursor.

The amorphous carbon precursor may be a polyimide resin, a furan resin, a phenol resin, a polyvinyl alcohol resin, a poly(meth)acrylic acid resin, a polyurethane resin, a cellulose resin, an epoxy resin, a polystyrene resin, petroleum pitch, coal tar pitch, green coke, mesophase pitch, a coal-based oil, petroleum heavy oil, coke, or a combination thereof.

The obtained mixture is subjected to compression molding. The compression molding process may be performed under a pressure at which the micrometer-scale secondary silicon particles may each maintain a spherical shape, for example, about 20 MPa to about 150 MPa. In addition, the compression molding process may be performed for about 1 minutes to about 5 minutes. Due to the compression molding process, the micrometer-scale spherical secondary silicon particles and the amorphous carbon precursor may strongly adhere to each other, and the amorphous carbon precursor may be easily inserted between the primary particles. Therefore, the amorphous carbon precursor may be easily inserted into the pores formed in the secondary particles, the amorphous carbon may be present at an appropriate or suitable amount (at an appropriate or suitable thickness) between the primary particles in the final active material, and thus the amorphous carbon may be formed into a coating layer with an appropriate or suitable thickness on the surface of the secondary particle. If (e.g., when) the compression molding process is not performed, the adhesion of the micrometer-scale spherical secondary particles and the amorphous carbon precursor is not strong. In addition, because the amorphous carbon precursor is not easily inserted between the primary particles and is located mostly on the surface of the secondary particles, the amorphous carbon is present on the surface of the secondary particles at an excessively (or substantially) large thickness in the final negative electrode active material, which is not suitable.

A negative electrode active material (i.e., second negative electrode active material) for a rechargeable lithium battery is prepared by thermally treating the obtained compression molded product. The thermal treatment process may be performed at about 400 °C to about 1200 °C, or about 700 °C to about 1000 °C. When the thermal treatment process is performed within the above temperature range, the shape of the negative electrode active material may remain spherical, and as the amorphous carbon is carbonized, the conductivity of the negative electrode active material may be improved, and the initial efficiency of the battery may be improved. In addition, the thermal treatment process may be performed under an $N_2$ atmosphere. Through the thermal treatment process, the amorphous carbon precursor is converted into amorphous carbon, which is integrated into the negative electrode active material.

**When the second negative electrode active material being the (ii) negative electrode active material**

The negative electrode active material mixture includes the first negative electrode active material and the second negative electrode active material (ii) (i.e., the (ii) negative electrode active material). For convenience of description, in this section, the second negative electrode active material (ii) may simply be referred as the second negative electrode active material.

In one or more embodiments, the negative electrode for a rechargeable lithium battery includes a negative electrode active material layer, and the negative electrode active material layer includes a first negative electrode active material. Because the first negative electrode active material is dense and thus free from cracking, crumbling, and damage, the manufacturing efficiency and battery efficiency of the negative electrode may be significantly increased.

The negative electrode for a rechargeable lithium battery may further include the second electrode active material (i.e., the (ii) negative electrode active material). The second negative electrode active material may be manufactured at low pressure during roll-pressing due to low spring-back after roll-pressing, eliminating the need for high-pressure roll-pressing and preventing or reducing a decrease in battery efficiency. Roll-pressing under high pressure cracks the active material, which may increase the specific surface area of the active material and reduce the efficiency of the negative electrode.

The negative electrode for a rechargeable lithium battery according to one or more embodiments may have low expansion characteristics and excellent or suitable lifespan characteristics, thereby increasing battery efficiency.

Because the negative electrode includes a mixture, i.e., the mixture of the first negative electrode active material and the second negative electrode active material (the (ii) negative electrode active material), the efficiency and battery efficiency of the negative electrode may significantly increase.

In one or more embodiments, the mixture may be included at about 95 wt% or more, for example, about 95 wt% to 100wt%, about 99 wt% to 100 wt%, or 100 wt% of the total negative electrode active material in the negative electrode active material layer. Within the above range, it may be easy to achieve the above-described effects of the negative electrode.

In one or more embodiments, the negative electrode active material, for example, the mixture, may be included at about 90 wt% to about 99 wt% of a total weight of the negative electrode active material layer. Within the above range, a capacity improvement effect can be achieved.

In one or more embodiments, in the mixture, the first negative electrode active material may be included at about 20 wt% to about 80 wt%, for example, about 20 wt% to about 60 wt%, and the second negative electrode active material may be included at about 20 wt% to about 80 wt%, for example, about 40 wt% to about 80 wt%, based on the total weight of the negative electrode active material layer. Within the above range, the battery efficiency of the dry negative electrode may be increased.

The second negative electrode active material has pores and a sphericity (S) of about 0.9 to about 1.0 according to Equation 2, and may include silicon nanoparticles and an amorphous carbon coating layer on (e.g., arranged on) the surface of each of the silicon nanoparticles.

In one or more embodiments, the pores include mesopores, and a ratio of the volume of mesopores to the total pore volume of the second negative electrode active material is about 30% or more and less than about 70%.

In one or more embodiments, the volume ratio of the mesopores is (mesopore volume/total pore volume)*100, and the volume ratio may be about 30% or more and less than about 70%, for example, about 30% to about 68%.

In one or more embodiments, the total pore volume and the mesopore volume of the second negative electrode active material may be quantified using a Barrett-Joyner-Halenda (BJH) analysis instrument.

In one or more embodiments, the total pore volume includes the volume of mesopores and the total volume of other pores formed within the second negative electrode active material regardless of their size. In one or more embodiments, the total pore volume may be about 0.001 cm$^3$/g to about 0.05 cm$^3$/g, about 0.005 cm$^3$/g to about 0.05 cm$^3$/g, or about 0.001 cm$^3$/g to about 0.01 cm$^3$/g, which may be a value measured by BJH.

The "mesopores" as used herein refer to pores with a size of about 2 nm to about 50 nm.

In one or more embodiments, the pores may include macropores with a size of more than about 50 nm. When the pore size exceeds 50 nm, the pores may be classified as macropores. The maximum size of the macropores may be about 500 nm, but embodiments of the present disclosure are not limited thereto. It is desirable that the macropores are included at about 1 vol% or less with respect to the total pore volume, for example, a minimum of 0 vol%, which indicates substantially no macropores in the second negative electrode active material.

The pores may include micropores with a size of more than 0 nm and less than about 2 nm. The volume ratio of the micropores included in the negative electrode active material may be a volume ratio excluding that of mesopores from the total pore vol%, and if (e.g., when) macropores are also present, it may correspond to the volume ratio excluding that of mesopores and macropores.

The pore size may refer to the average diameter of pores or the length of the longest axis of pores.

The second negative electrode active material according to one or more embodiments is spherical, so it may be well dispersed throughout the negative electrode, resulting in a decreased expansion rate during charging and discharging. In addition, if (e.g., when) the second negative electrode active material is used in combination with crystalline carbon, the spherical second negative electrode active material may be more readily inserted into spaces within the crystalline carbon, and thus may be more uniformly (e.g., substantially uniformly) dispersed throughout the negative electrode.

The second negative electrode active material according to one or more embodiments may have a sphericity (S) of about 0.9 or more, for example, about 0.92 to about 0.98 or about 0.92 to about 0.95. If (e.g., when) the sphericity of the second negative electrode active material falls within the above range, an expansion rate during charging and discharging may be more effectively inhibited or reduced. The sphericity may be measured according to Equation 2.

The second negative electrode active material according to one or more embodiments may have a span value of about 1.1 to about 1.6, as measured according to Equation 3:

## Equation 3

$$\text{Span} = (D90\text{-}D10)/D50.$$

In Equation 3, D10 is the particle diameter of second negative electrode active material particles whose cumulative volume is 10 vol% in a particle size distribution, D50 is the particle diameter of second negative electrode active material particles whose cumulative volume is 50 vol% in the particle size distribution, and D90 is the particle diameter of second negative electrode active material particles whose cumulative volume is 90 vol% in the particle size distribution.

In one or more embodiments, the span value may be about 1.1 to about 1.55 or about 1.1 to about 1.5.

In one or more embodiments, D50 of the second negative electrode active material may be about 5 $\mu$m to about

12 $\mu$m, for example, about 5 $\mu$m to about 10 $\mu$m, about 6 $\mu$m to 10 $\mu$m. Within the above range, it may be easy to achieve the effects of the second negative electrode active material.

If (e.g., when) the span value of the second negative electrode active material falls within the above range, it refers to that almost no fine particles is substantially included in the second negative electrode active material. For example, because the second negative electrode active material has a size of 1 $\mu$m or less, and generally does not include fine particles, which is amorphous, it may have a small specific surface area, thereby reducing side reactions with an electrolyte and extending cycle life.

The second negative electrode active material according to one or more embodiments may have a small specific surface area, that is, a small BET specific surface area, wherein the specific surface area may be about 0.5 $m^2$/g to about 2 $m^2$/g, about 0.8 $m^2$/g to about 2 $m^2$/g, or about 0.8 $m^2$/g to about 1.5 $m^2$/g. This specific surface area is a value that is lower than the specific surface area of a silicon-carbon composite as a negative electrode active material, which is about 3 $m^2$/g,

In one or more embodiments, the particle diameter of the silicon nanoparticles may be about 10 nm to about 1,000 nm, and according to one or more other embodiments, it may be about 10 nm to about 200 nm, or about 20 nm to about 150 nm. If (e.g., when) the particle diameter of the silicon nanoparticles falls within the above range, excessive volume expansion occurring during charging and discharging may be inhibited or reduced, and the disconnection of a conductive path, caused by particle fragmentation, during charging and discharging can be prevented or reduced.

In the amorphous carbon coating layer, the amorphous carbon may be soft or hard carbon, mesophase pitch carbide, calcined coke, or a combination thereof. A thickness of the amorphous carbon coating layer may be about 1 nm to about 2 $\mu$m, about 1 nm to about 500 nm, about 10 nm to about 300 nm, or about 20 nm to about 200 nm. If (e.g., when) the thickness of the amorphous carbon coating layer falls within the above range, Si volume expansion during charging and discharging may be well inhibited or reduced.

In the second negative electrode active material, the content (e.g., amount) of the silicon nanoparticles may be about 55 wt% to about 64 wt%, or about 58 wt% to about 62 wt% with respect to a total weight of 100 wt% of the second negative electrode active material. In addition, the content (e.g., amount) of the amorphous carbon coating layer may be about 36 wt% to about 45 wt%, or about 38 wt% to 42 wt% with respect to a total weight of 100 wt% of the second negative electrode active material.

The second negative electrode active material according to one or more embodiments may further include a polymer layer on (e.g., arranged on) the amorphous carbon coating layer. The polymer layer may include a copolymer of polyvinyl alcohol and polyacrylic acid, and the copolymer may be a crosslinked copolymer in which polyvinyl alcohol and polyacrylic acid are crosslinked. If (e.g., when) the negative electrode active material layer further includes the polymer layer, the volume expansion of the negative electrode active material during charging and discharging may be more effectively inhibited or reduced.

In addition, because the polymer layer includes polyvinyl alcohol and polyacrylic acid, the penetration of an electrolyte into the negative electrode active material, for example, the penetration of the electrolyte into empty spaces, e.g., pores, of the negative electrode active material, may be prevented or reduced during charging and discharging. Therefore, side reactions between the negative electrode active material and the electrolyte may be more effectively inhibited or reduced.

In addition, the polyvinyl alcohol and polyacrylic acid are water-based polymers and are environmentally friendly polymers.

In one or more embodiments, the polymer layer may include a copolymer of polyvinyl alcohol and polyacrylic acid, and for example, a crosslinked polymer or crosslinked copolymer in which polyvinyl alcohol and polyacrylic acid are crosslinked. For example, in one or more embodiments, the polymer of the polymer layer may be a crosslinked polymer of polyvinyl alcohol and polyacrylic acid. If (e.g., when) the polyvinyl alcohol and the polyacrylic acid are crosslinked and included in the polymer layer, they may not be dissolved in a solvent used in the preparation of the negative electrode active material layer, particularly water, and the polymer layer may be maintained.

In the second negative electrode active material according to one or more embodiments, if (e.g., when) the silicon nanoparticles and the amorphous carbon coating layer are referred to as a silicon-carbon composite, the content (e.g., amount) of the polymer layer may be about 0.01 to about 3 parts by weight, or about 1.2 to about 2.1 parts by weight with respect to 100 parts by weight of the silicon-carbon composite. If (e.g., when) the content (e.g., amount) of the polymer layer falls within the above range, the effects resulting from the formation of the polymer layer may be further enhanced.

In one or more embodiments, in the polymer layer, a mixing ratio of the polyvinyl alcohol to the polyacrylic acid may be about 3:97 to about 40:60 (weight ratio), about 6:94 to about 40:60 (weight ratio), or about 6:94 to about 20:80 (weight ratio). If (e.g., when) the mixing ratio of the polyvinyl alcohol to the polyacrylic acid falls within the above range, that is, if (e.g., when) the content (e.g., amount) of the polyacrylic acid is higher than that of the polyvinyl alcohol, lifespan characteristics may be further improved.

In one or more embodiments, a ratio of functional groups in the polyvinyl alcohol and the polyacrylic acid included in the polymer layer may also be appropriately or suitably adjusted. For example, a molar ratio of OH groups in the polyvinyl alcohol to COOH groups in the polyacrylic acid may be about 5:95 to about 50:50, or about 10:90 to about 30:70. If (e.g.,

when) the functional group molar ratio satisfies the above range, the effects achieved by the formation of the polymer layer may be further improved, and lifespan characteristics may be further improved.

The second negative electrode active material according to one or more embodiments may be prepared through the following process.

Nano-scale silicon primary particles are prepared by grinding micrometer-scale silicon particles. The grinding process may be performed through a process such as ball milling. In the grinding process, a dispersant may be used. As the dispersant, stearic acid, boron nitride (BN), MgS, polyvinylpyrrolidone (PVP), or a combination thereof may be used. An amount of dispersant used is sufficient as long as it enables the milling process of silicon particles, but embodiments of the present disclosure are not limited thereto.

A particle diameter of the silicon primary particles may be about 1 nm to about 1000 nm, about 10 nm to about 200m, or about 20 nm to about 150 nm.

The obtained mixture is dried. The drying process may be performed using a spray drying process. By performing a drying process using a spray drying process, a dry product containing spherical particles with a more uniform particle size may be formed, and a secondary particle in which the primary particles are assembled may also be formed. If (e.g., when) the dry product is in a form of spherical particles with a substantially uniform particle size, a subsequently formed amorphous carbon layer may be more uniformly (e.g., substantially uniformly) formed on the entire surface of the dry product particles.

The dry product and an amorphous carbon precursor are mixed.

As the amorphous carbon precursor, petroleum coke, coal coke, petroleum pitch, coal pitch, green coke, or a combination thereof may be used.

The obtained mixture is then subjected to compression molding.

The obtained product may be further subjected to compression molding. The compression molding may be performed to reduce pores in the second negative electrode active material, thereby effectively inhibiting side reactions.

The compression molding process may be performed under a pressure sufficient for the acquired product, particularly, the negative electrode active material that is the final product, to maintain its spherical shape, for example, under more than 0 MPa and about 300 MPa or less, more than 0 MPa and about 200 MPa or less, or about 5 MPa to about 20 MPa.

The compression molding process may be performed through cold isostatic pressing (CIP). If (e.g., when) the compression molding is performed within the above pressure range, the spherical shape of the negative electrode active material may be maintained, and pores may be suitably reduced, without generating fine particles.

Subsequently, the obtained compression molding product is carbonized. The carbonization process may be performed at about 600 °C to about 1,000 °C. In the carbonization process, the dispersant may be removed. In addition, the carbonization process may be performed in an $N_2$ atmosphere, a helium atmosphere, or a combination thereof. Through the carbonization process, the amorphous carbon precursor may be converted into amorphous carbon to surround the surface of the compression molding product particle, resulting in an amorphous carbon coating layer.

If (e.g., when) the carbonization process is performed within the above-mentioned temperature range, the excessive growth of silicon (Si) particles and SiC formation may be inhibited or reduced, and the electrical conductivity of the amorphous carbon may be improved. In addition, some of the amorphous carbon is introduced into the pores formed between the primary particles and is present on the primary particle surface, thereby around (e.g., surrounding) the surface of the primary particle. If (e.g., when) the atmosphere of the carbonization process satisfies the above-mentioned conditions, silicon oxidation and SiC formation may be inhibited or reduced, and the amorphous carbon may be effectively formed, thereby reducing active material resistance.

In one or more embodiments, instead of the process of mixing the dry product and the amorphous carbon precursor, a vapor-phase coating process may be performed using the dry product and an amorphous carbon precursor gas. In this regard, an amorphous carbon coating layer may be formed on the product surface without performing a separate carbonization process. Accordingly, after the vapor-phase coating process is performed, a compression process may be performed. Conditions for the compression process are the same as described above.

When the negative electrode active material layer according to one or more embodiments further includes a polymer layer, the prepared negative electrode active material (silicon-carbon composite) and a polymer solution are mixed, dried, and then thermally treated.

The polymer solution may be prepared by mixing polyvinyl alcohol and polyacrylic acid in a solvent, and the solvent may be water, ethanol, or a combination thereof.

Here, the mixing ratio of the silicon-carbon composite and the polymer solution and the mixing ratio of the polyvinyl alcohol to the polyacrylic acid in the polymer solution may be suitably adjusted so that the above-mentioned polymer content (e.g., amount) and mixing ratio of the polyvinyl alcohol to the polyacrylic acid are achieved in the prepared negative electrode active material.

According to the thermal treatment process, through condensation between the OH group of the polyvinyl alcohol and the COOH group of the polyacrylic acid, the polyvinyl alcohol and the polyacrylic acid are crosslinked, thereby forming a crosslinked polymer.

The thermal treatment process may be performed at about 150 °C to about 200 °C. If (e.g., when) the thermal treatment process is performed within this temperature range, the condensation reaction, that is, the crosslinking reaction, may occur smoothly to form the crosslinked polymer.

Subsequently, the thermally treated product is subjected to a classification process. The classification process may be performed using a sieve such that the span value (defined by Equation 3) of the prepared negative electrode active material will be about 1.1 to about 1.6. For example, the classification process may be performed to obtain an active material having a particle size such that a span value of the active material obtained from D10, D50, and D90 becomes about 1.1 to about 1.6.

The second negative electrode active material may have an aspect ratio of about 0.85 or more, for example, about 0.85 to about 1.0. Within the above range, the tap density improvement effect of the second negative electrode active material may be exhibited. The "aspect ratio" used herein refers to a ratio of the longest major axis length to the shortest minor axis length in the area (e.g., projection area or cross-section area) of the second negative electrode active material. The aspect ratio may be measured using a device for measuring sphericity.

In one or more embodiments, the second negative electrode active material may have a tap density of about 1.0 g/cc or more, for example, about 1.0 g/cc to about 1.5 g/cc. Within the above range, the expansion improvement effect of the second negative electrode active material may be exhibited.

In one or more embodiments, the negative electrode active material layer may further include a third negative electrode active material.

The third electrode active material may further include a material that may reversibly intercalate/deintercalate lithium ions, lithium metal, a lithium-metal alloy, a material capable of doping and dedoping with lithium, and/or a transition metal oxide.

The material that may reversibly intercalate/deintercalate lithium ions may be a carbon-based negative electrode active material, for example, crystalline carbon, amorphous carbon, or a combination thereof. The crystalline carbon may be graphite, such as amorphous, plate-shaped, flaky, spherical, or fibrous natural graphite and/or artificial graphite, and the amorphous carbon may be soft carbon, hard carbon, mesophase pitch carbide, or calcined coke.

As the lithium-metal alloy, an alloy of lithium and a metal selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), and tin (Sn) may be used.

As the material capable of doping and dedoping with lithium, a Si-based negative electrode active material or a Sn-based negative electrode active material may be used. The Si-based negative electrode active material may be Si, a silicon-carbon composite, $SiO_x$ ($0 < x \leq 2$), a Si-Q alloy (wherein Q is selected from among an alkali metal, an alkaline earth metal, a Group 13 element, a Group 14 element (except Si), a Group 15 element, a Group 16 element, a transition metal, a rare-earth element, and a combination thereof), or a combination thereof. The Sn-based negative electrode active material may be Sn, $SnO_x$ ($0 < x \leq 2$) (e.g., $SnO_2$), a Sn-based alloy, or a combination thereof.

The silicon-carbon composite (e.g., in a form of particles) may be a composite of silicon and amorphous carbon. According to one or more embodiments, the silicon-carbon composite may be silicon particles whose surfaces are coated with amorphous carbon. For example, in one or more embodiments, the silicon-carbon composite may include secondary particles (cores) in each of which silicon primary particles are assembled and an amorphous carbon coating layer (shell) on (e.g., arranged on) the surface of each of the secondary particles. The amorphous carbon may be located between the silicon primary particles, so that the silicon primary particles are coated with amorphous carbon. The secondary particles may be dispersed in the amorphous carbon matrix.

In one or more embodiments, the silicon-carbon composite may further include crystalline carbon. For example, the silicon-carbon composite may include a core including crystalline carbon and silicon particles, and an amorphous carbon coating layer on (e.g., arranged on) a surface of the core.

In one or more embodiments, the silicon-based negative electrode active material or the Sn-based negative electrode active material may be mixed with a carbon-based negative electrode active material.

**Binder**

In one or more embodiments, the negative electrode active material layer may further include a binder in addition to the negative electrode active material.

The binder serves to adhere particles of the negative electrode active material to each other well, and adhere the negative electrode active material to a current collector well. As the binder, a non-aqueous (e.g., water-insoluble) binder, an aqueous (e.g., water-soluble) binder, a dry binder, or a combination thereof may be used.

The non-aqueous binder may be polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from among a styrene-butadiene rubber, a (meth)acrylated styrene-butadiene rubber, a (meth)acrylonitrile-butadiene rubber, a (meth)acrylic rubber, a butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

When an aqueous binder is used as the binder of the negative electrode, a cellulose-based compound that can impart viscosity may be further included. As the cellulose-based compound, one or more of carboxymethyl cellulose, hydroxypropylmethyl cellulose, methyl cellulose, or an alkali metal salt thereof may be used. As the alkali metal, Na, K, or Li may be used.

In one or more embodiments, the negative electrode is a dry negative electrode, and the dry negative electrode will be described in more detail below.

The negative electrode active material layer may include a first binder.

The first binder may be included without particular limitation as long as it may be fiberized in the step of manufacturing a dry negative electrode to be described later. The fiberization may include a treatment for finely dividing a polymeric compound. For example, in one or more embodiments, the fiberization may be performed using a mechanical shear force. The dry negative electrode may be manufactured by allowing the fiberized polymer fibers, whose surfaces have been unraveled to generate a large number of microfibers, to entangle with the negative electrode active material and/or a conductive material to be described later.

In one or more embodiments, the first binder may include polytetrafluoroethylene (PTFE), polyvinylidene fluoride (PVDF), a polyolefin, or a mixture thereof. For example, in one or more embodiments, the first binder may include PTFE, for example, be PTFE. For example, in one or more embodiments, one or more selected from among PTFE and PVDF may be included at about 60 wt% or more, for example, about 90 wt% to 100 wt%, or 100 wt% based on a total weight of 100 wt% of the first binder.

In one or more embodiments, the first binder may be included in a fiberized state in the negative electrode active material layer.

In one or more embodiments, the negative electrode active material layer may include about 80 wt% to about 99.5wt%, for example, about 90 wt% to about 99.5 wt%, of the negative electrode active material, and about 0.5 wt% to about 20 wt%, for example, about 0.5 wt% to about 10 wt%, of the first binder, based on a total weight of 100 wt% of the negative electrode active material layer. Within the above ranges, it is easy to manufacture a dry negative electrode, and an effect of improving the bonding strength between the materials constituting the electrode by the fiberized binder may be achieved.

In one or more embodiments, the negative electrode active material layer may further include a second binder, and the second binder may include a binder that is not fiberized. For example, the non-fiberized binder may include one or more selected from among polyethylene oxide and polyvinylidene fluoride-co-hexafluoropropylene.

The negative electrode active material layer for a dry negative electrode (also referred to as a dry electrode film) may be prepared by the following processes:

(a) a process of preparing a powdery mixture containing: the negative electrode active material; and a binder including the first binder;
(b) a kneading process for kneading the powdery mixture;
(c) a pulverization process for obtaining an electrode powder by grinding the mixture mass prepared by the kneading process; and
(d) a process for obtaining a dry electrode film by calendering the electrode powder.

First, a powdery mixture is prepared by mixing the negative electrode active material and a binder containing a first binder. The mixing may be performed such that the negative electrode active material and the binder are uniformly (e.g., substantially uniformly) distributed in the mixture in a powder form, and is not limited as long as it enables simple mixing thereof. However, because the powdery mixture is for manufacturing a dry electrode film, it does not include a solvent. The mixing may be performed by dry mixing, for example, by inputting the materials into a device such as a blender. In one or more embodiments, the mixture may further include a conductive material.

In one or more embodiments, the mixing time is not particularly limited, for example, may be about 1 second to about 10 minutes. In one or more embodiments, the mixing speed is not particularly limited, for example, may be suitably controlled or selected within a range of about 3000 to 30000 rpm. In one or more embodiments, in terms of high uniformity and the control of the crystallinity of a binder resin, the mixing may be performed in a mixing device at about 5,000 rpm to about 20,000 rpm for about 30 seconds to about 2 minutes, for example, at about 10,000 rpm to about 15,000 rpm for about 30 seconds to about 5 minutes.

Subsequently, the kneading process is performed to fiberize the binder in the obtained mixture. The kneading is a process of forming a mixture mass having a solid content (e.g., amount) of 100 wt% by bonding or connecting the negative electrode active material and/or the conductive material while fiberizing the binder.

For example, the kneading in (b) may be controlled or selected at a speed of about 10 rpm to about 100 rpm. For example, in one or more embodiments, the kneading may be controlled or selected at a speed of about 40 rpm to about 70 rpm. The kneading may be performed for about 1 minute to about 30 minutes. For example, in one or more embodiments, the kneading may be performed at a speed of about 40 rpm to about 70 rpm for about 3 minutes to about 7 minutes. In one or more embodiments, during the kneading, a shear stress may be controlled or selected within a range of about 10/s to about 500/s. According to one or more embodiments of the present disclosure, the kneading may be performed for about 1 minute to about 30 minutes and a shear stress of about 30/s to about 100/s.

The kneading process may be performed at a high temperature and atmospheric pressure or higher, for example, at a pressure higher than atmospheric pressure. In one or more embodiments, the kneading of the mixture may be performed at about 70 °C to about 200 °C, for example, at about 90 °C to about 150 °C.

In addition, the kneading may be performed at atmospheric pressure or higher, for example, a pressure of about 1 atm to about 3 atm, for example, about 1.1 atm to about 3 atm. If (e.g., when) the kneading is performed at a pressure exceeding the above-mentioned range, it is not desirable because an excessive shear force and pressure may be applied, potentially causing the formed fibers to break or the density of the mixture mass to become excessively high. For example, according to one or more embodiments of the present disclosure, the intended effects of the present disclosure may be achieved if (e.g., when) low-shear mixing is performed under conditions of high temperature and atmospheric pressure or higher, instead of high-shear mixing.

Subsequently, a pulverization process for obtaining an electrode powder by grinding the mixture mass prepared by the kneading process is performed.

For example, although the mixture mass prepared by the kneading may be directly calendered, in this regard, the mixture mass may need to be pressed into a thin film form under high pressure and high temperature, which may cause problems and issues such as the film's density becoming too high or an inability to obtain a uniform film. Therefore, the prepared mixture mass undergoes the above-mentioned pulverization process for grinding the lump.

The grinding may be performed using a suitable grinding device such as a blender or a grinder, but embodiments of the present disclosure are not limited thereto. During the grinding, the speed (e.g., grinding speed or crushing speed) may be controlled or selected within the range of about 3000 rpm to about 30000 rpm. The grinding time may be suitably controlled or selected within the range of about 1 second to about 10 minutes. The crushing speed and time are not particularly limited to the above-mentioned ranges. In one or more embodiments, the grinding may be performed at a speed of about 5000 rpm to about 20000 rpm for about 30 seconds to about 10 minutes, or at a speed of about 10000 rpm to about 18000 rpm for about 30 seconds to about 5 minutes. Sufficient grinding is achieved within the above range, making it easy to form a film and reducing the amount of fine particles generated.

A dry electrode film is manufactured by hot-pressing the electrode powder. For example, in one or more embodiments, the electrode powder obtained after completing the grinding process as described above in subjected to a calendering process.

The electrode powder is processed into a sheet-like film through hot pressing in the calendering process. The calendering process may be performed by a pair of oppositely arranged (e.g., facing) calender rolls. The calendering process may be performed by passing the electrode powder through multiple calender rolls.

The electrode powder may be pretreated before the calendering process.

The pretreatment process may be performed by applying heat to the electrode powder to maintain the temperature of the electrode powder at about 80 °C or more, for example, about 100 °C or more for a set or predetermined time. The pretreatment process time may be about 1 minute or longer, and may be suitably adjusted according to the amount of powder. For example, in one or more embodiments, the temperature of the electrode powder may be maintained at about 80 °C or higher for about 1 minute or longer, or at about 100 °C or higher for about 1 minute or longer. In one or more embodiments, the heating temperature of the electrode powder is controlled or selected to be below the melting point of the binder resin to prevent or reduce the electrode material components included in the electrode powder, for example, the binder resin, from deteriorating. For example, the heating temperature may be controlled or selected to about 320 °C or less. The pretreatment process may be performed using a heating device such as a convection oven or an IR heating device. Here, it is desirable that the electrode powder does not stagnate while being stirred and heated.

After (d), a process of rolling the dry electrode film and laminating it on a current collector to be described later may be performed.

In one or more embodiments of the present disclosure, the dry electrode film may have a thickness of about 100 $\mu$m to about 200 $\mu$m, but embodiments of the present disclosure are not particularly limited thereto. For example, in one or more embodiments, the dry electrode film may have a thickness of about 100 $\mu$m to about 150 $\mu$m.

**Conductive material**

In one or more embodiments, the negative electrode active material layer may further include a conductive material.

The conductive material is not particularly limited as long as it has conductivity (e.g., is a conductor) without causing chemical changes in the battery. For example, as the conductive material, one or more selected from among graphite such as natural graphite and/or artificial graphite; carbon black compounds such as carbon black, acetylene black, Ketjen black, channel black, furnace black, lamp black, and thermal black; conductive fibers such as carbon fibers and/or metal fibers; metal powders such as carbon fluoride, aluminum, and nickel powder; conductive whiskers such as zinc oxide and potassium titanate; conductive metal oxides such as titanium oxide; and conductive materials such as polyphenylene derivatives, may be used. For example, in one or more embodiments, for uniform mixing of the conductive material and improved conductivity, one or more selected from the group consisting of active carbon, graphite, carbon black, and carbon nanotubes may be included, for example, in one or more embodiments, active carbon may be included.

In one or more embodiments, the negative electrode active material layer may include about 80 wt% to about 99 wt%, for example, about 90 wt% to about 99.5 wt%, of the negative electrode active material, about 0.5 wt% to about 20 wt%, for example, about 0.5% to about 10 wt%, of the binder, and about 0.5 wt% to about 20 wt%, for example, about 0.5% to about 10 wt%, of the conductive material, based on a total weight of 100 wt% of the negative electrode active material layer. Within the above ranges, it is easy to manufacture the dry electrode film, and an effect of imparting electron conductivity may be achieved.

In one or more embodiments, the negative electrode may further include a current collector on (e.g., arranged on) a (e.g., one) surface of the negative electrode active material layer.

The current collector is not particularly limited as long as it provides high conductivity without causing chemical changes in the battery. For example, stainless steel, aluminum, nickel, titanium, calcined carbon, copper or aluminum, or stainless steel, copper foil, nickel foil, stainless steel foil, titanium foil, nickel foam, copper foam, or a conductive metal-coated polymer substrate whose surface is treated with carbon, nickel, titanium, silver, and/or the like may be used as the current collector. In one or more embodiments, the current collector may also increase the adhesive strength of the negative electrode active material by having fine irregularities formed on its surface, and may have one or more suitable forms, such as a film, a sheet, a foil, a net, a porous body, a foam, and a nonwoven body.

The current collector may have a thickness of about 10 $\mu$m to about 50 $\mu$m, but embodiments of the present disclosure are not particularly limited. For example, in one or more embodiments, the current collector may have a thickness of about 10 $\mu$m to about 20 $\mu$m.

## Rechargeable lithium battery

According to one or more embodiments of the present disclosure, a rechargeable lithium battery may include the negative electrode active material.

The rechargeable battery may include: a negative electrode for a rechargeable battery, which includes the negative electrode active material; and a positive electrode. The negative electrode for a rechargeable battery is substantially the same as described above.

## Positive electrode

The positive electrode for a rechargeable lithium battery may include a positive electrode current collector and a positive electrode active material layer on the positive electrode current collector. The positive electrode active material layer may include a positive electrode active material (e.g., in a form of particles) and may further include a binder and/or a conductive material. In one or more embodiments, the positive electrode may further include an additive that may serve as a sacrificial positive electrode.

## Positive electrode active material

The positive electrode active material may include a compound (lithiated intercalation compound) that is capable of intercalating and deintercalating lithium. For example, in one or more embodiments, at least one of a composite oxide of lithium and a metal selected from among cobalt, manganese, nickel, and combinations thereof may be used.

The composite oxide may be a lithium transition metal composite oxide. Nonlimiting examples of the composite oxide may include a lithium nickel-based oxide, a lithium cobalt-based oxide, a lithium manganese-based oxide, a lithium iron phosphate-based compound, a cobalt-free nickel-manganese-based oxide, and/or a combination thereof.

In one or more embodiments,, one or more compounds represented by any one selected from among the following Chemical Formulas may be used: $Li_aA_{1-b}X_bO_{2-c}D_c$ (0.90$\leq$a$\leq$1.8, 0$\leq$b$\leq$0.5, and 0$\leq$c$\leq$0.05); $Li_aMn_{2-b}X_bO_{4-c}D_c$ (0.90$\leq$a$\leq$1.8, 0$\leq$b$\leq$0.5, and 0$\leq$c$\leq$0.05); $Li_aNi_{1-b-c}Co_bX_cO_{2-\alpha}O_\alpha$ (0.90$\leq$a$\leq$1.8, 0$\leq$b$\leq$0.5, 0$\leq$c$\leq$0.5, and 0<$\alpha$<2); $Li_aNi_{1-b-c}Mn_bX_cO_{2-\alpha}D_\alpha$ (0.90$\leq$a$\leq$1.8, 0$\leq$b$\leq$0.5, 0$\leq$c$\leq$0.5, and 0<$\alpha$<2); $Li_aNi_bCo_cL1_dG_eO_2$ (0.90$\leq$a$\leq$1.8, 0$\leq$b$\leq$0.9, 0$\leq$c$\leq$0.5, 0$\leq$d$\leq$0.5, and 0$\leq$e$\leq$0.1); $Li_aNiG_bO2$ (0.90$\leq$a$\leq$1.8 and 0.001$\leq$b$\leq$0.1); $Li_aCoG_bO_2$ (0.90$\leq$a$\leq$1.8 and 0.001$\leq$b$\leq$0.1);

$Li_aMn_{1-b}G_bO_2$ (0.90≤a≤1.8 and 0.001≤b≤0.1); $Li_aMn_2G_bO_4$ (0.90≤a≤1.8 and 0.001≤b≤0.1); $Li_aMn_{1-g}G_gPO_4$ (0.90≤a≤1.8 and 0≤g≤0.5); $Li_{(3-f)}Fe_2(PO_4)_3$ (0≤f≤2); and $Li_aFePO_4$ (0.90≤a≤1.8).

In the foregoing Chemical Formulas, A is nickel (Ni), cobalt (Co), manganese (Mn), or a combination thereof; X is aluminum (Al), Ni, Co, Mn, chromium (Cr), iron (Fe), magnesium (Mg), strontium (Sr), vanadium (V), a rare earth element, or a combination thereof; D is oxygen (O), fluorine (F), sulfur (S), phosphorus (P), or a combination thereof; G is Al, Cr, Mn, Fe, Mg, lanthanum (La), cerium (Ce), Sr, V, or a combination thereof; and L1 is Mn, Al, or a combination thereof.

In one or more embodiments, the positive electrode active material may be, for example, a high nickel-based positive electrode active material having a nickel content (e.g., amount) of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of a total metal excluding lithium in the lithium transition metal composite oxide. The high-nickel-based positive electrode active material may be capable of realizing high capacity and can be applied to a high-capacity, high-density rechargeable lithium battery.

An amount of the positive electrode active material may be about 90 wt% to about 99.5 wt% based on a total weight of 100 wt% of the positive electrode active material layer. Amounts of the binder and the conductive material may each be about 0.5 wt% to about 5 wt%, based on the total weight of 100 wt% of the positive electrode active material layer.

The binder serves to attach the positive electrode active material particles well to each other and also to attach the positive electrode active material well to the positive electrode current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and/or the like, as non-limiting examples.

The conductive material may be used to impart conductivity (e.g., electrical conductivity) to the electrode. Any material that does not cause chemical change (e.g., does not cause an undesirable chemical change in the rechargeable lithium battery) and conducts electrons may be used in the battery. Non-limiting examples of the conductive material may include a carbon-based material such as natural graphite, artificial graphite, carbon black, acetylene black, Ketjen black, a carbon fiber, a carbon nanofiber, and carbon nanotube; a metal-based material containing copper, nickel, aluminum, silver, and/or the like, in a form of a metal powder or a metal fiber; a conductive polymer such as a polyphenylene derivative; or a mixture thereof.

In one or more embodiments, Al may be used as the positive electrode current collector, but embodiments of the present disclosure are not limited thereto.

The rechargeable lithium battery may further include an electrolyte solution.

**Electrolyte Solution**

The electrolyte solution for a rechargeable lithium battery may include a non-aqueous organic solvent and a lithium salt.

The non-aqueous organic solvent may serve as a medium for transmitting ions that takes part in an electrochemical reaction of the rechargeable lithium battery.

The non-aqueous organic solvent may be a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like, and the aprotic solvent may include nitriles such as R-CN (wherein R is a C2 to C20 linear, branched, or cyclic hydrocarbon group, and may include a double bond, an aromatic ring, or an ether bond, and/or the like); amides such as dimethylformamide; dioxolanes such as 1,3-dioxolane, 1,4-dioxolane, and/or the like; sulfolanes; and/or the like.

The non-aqueous organic solvents may be used alone or in combination of two or more.

In one or more embodiments, if (e.g., when) a carbonate-based solvent is used, a cyclic carbonate and a chain carbonate may be mixed and used, and the cyclic carbonate and the chain carbonate may be mixed in a volume ratio of about 1:1 to about 1:9.

The lithium salt dissolved in the non-aqueous organic solvent supplies lithium ions in the rechargeable lithium battery, enables a basic operation of the rechargeable lithium battery, and improves transportation of the lithium ions between positive and negative electrodes. Non-limiting examples of the lithium salt include at least one selected from among $LiPF_6$, $LiBF_4$, $LiSbF_6$, $LiAsF_6$, $LiClO_4$, $LiAlO_2$, $LiAlCl_4$, $LiPO_2F_2$, $LiCl$, $LiI$, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are each an integer of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

The lithium rechargeable battery may further include a separator.

**Separator**

Depending on the type (kind) of the rechargeable lithium battery, a separator may be present between the positive electrode and the negative electrode. The separator may include polyethylene, polypropylene, polyvinylidene fluoride, or a multilayer film of two or more layers thereof, or a mixed multilayer film such as a polyethylene/polypropylene two-layer separator, a polyethylene/polypropylene/polyethylene three-layer separator, a polypropylene/polyethylene/-polypropylene three-layer separator, and/or the like.

The separator may include a porous substrate and a coating layer including an organic material, an inorganic material, or a combination thereof on one or both (e.g., simultaneously) surfaces (e.g., two opposite surfaces) of the porous substrate.

The porous substrate may be a polymer film formed of any one selected from among polymer polyolefin such as polyethylene and/or polypropylene, polyester such as polyethylene terephthalate and/or polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or a mixture of two or more thereof.

The organic material may include a polyvinylidene fluoride-based polymer or a (meth)acrylic polymer.

The inorganic material may include inorganic particles selected from among $Al_2O_3$, $SiO_2$, $TiO_2$, $SnO_2$, $CeO_2$, $MgO$, $NiO$, $CaO$, $GaO$, $ZnO$, $ZrO_2$, $Y_2O_3$, $SrTiO_3$, $BaTiO_3$, $Mg(OH)_2$, boehmite, and a combination thereof, but embodiments of the present disclosure are not limited thereto.

The organic material and the inorganic material may be mixed in one coating layer, or a coating layer including an organic material and a coating layer including an inorganic material may be stacked.

**The rechargeable lithium battery**

The rechargeable lithium battery may be classified into a cylindrical, prismatic, pouch, or coin-type (kind) battery, and/or the like depending on a shape thereof.

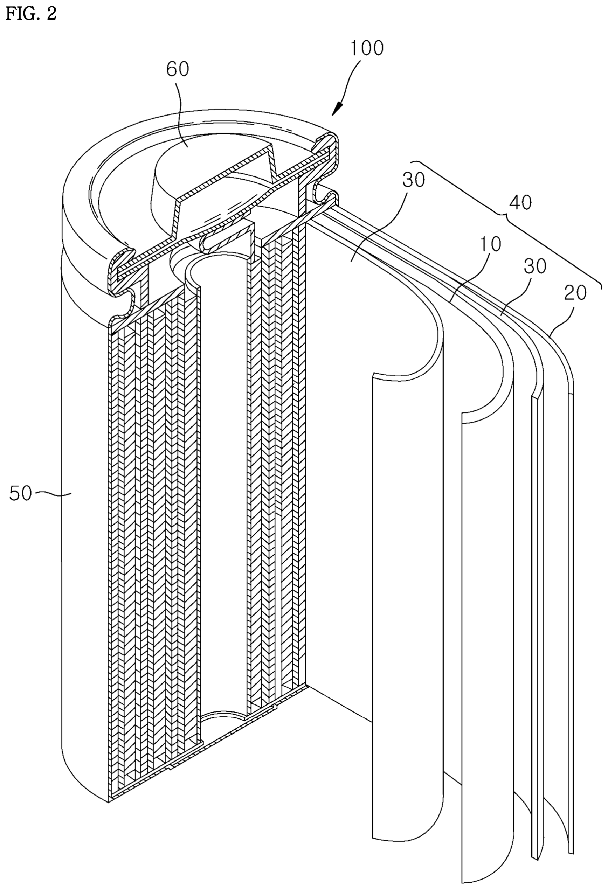

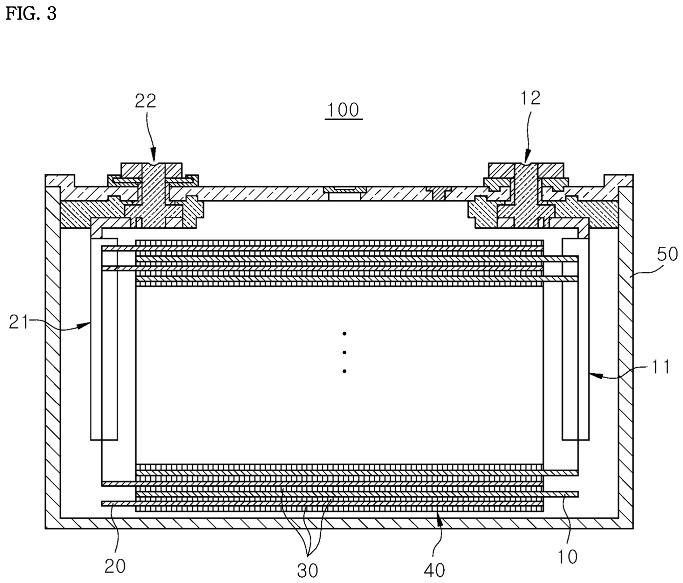

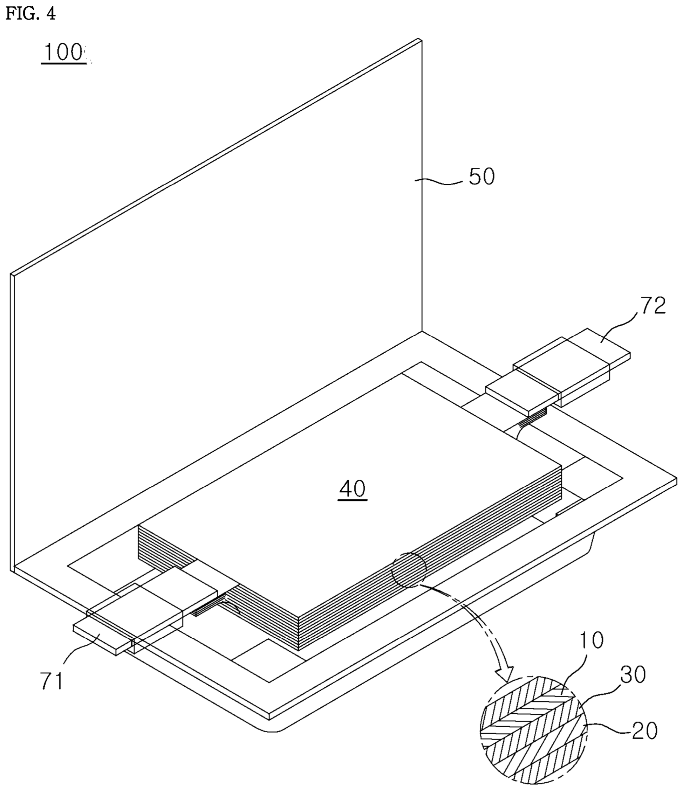

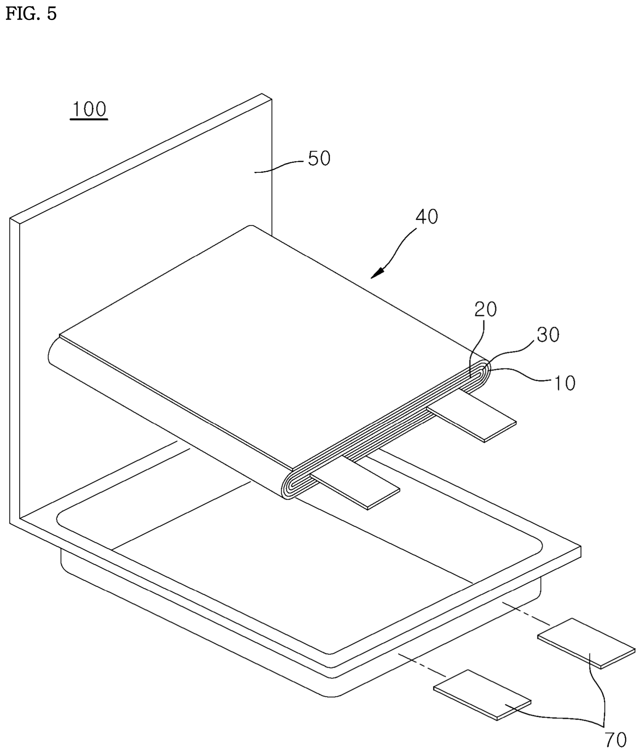

FIGS. 2 to 5 are each a schematic view illustrating a rechargeable lithium battery according to one or more embodiments of the present disclosure. FIG. 2 shows a cylindrical battery, FIG. 3 shows a prismatic battery, and FIGS. 4 and 5 each show a pouch-type (kind) battery. Referring to FIGS. 2 to 5, a rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. In one or more embodiments, the rechargeable lithium battery 100 may include a sealing member 60 sealing the case 50, as shown in FIG. 2. In one or more embodiments, in FIG. 3, the rechargeable lithium battery 100 may include a positive lead tab 14, a positive terminal 12, a negative lead tab 21, and a negative terminal 22. In one or more embodiments, as shown in FIGS. 4 and 5, the rechargeable lithium battery 100 may include an electrode tab 70, which may be, for example, a positive electrode tab 71 and a negative electrode tab 72, serving as an electrical path for inducing the current formed in the electrode assembly 40 to the outside.

The rechargeable lithium battery according to one or more embodiments may be applied to automobiles, mobile phones, and/or various types (kinds) of electric devices, as non-limiting examples.

Hereinafter, examples and comparative examples of the present disclosure will be described. However, the following examples are merely examples, and the present disclosure is not limited thereto.

**Example 1**

(1) A flaky natural graphite raw material with an average particle diameter (D50) 120 $\mu$m was ground into primary particles with a major axis length of 6 $\mu$m using a jet milling method. The primary particles were assembled into secondary particles with an average particle diameter (D50) 15 $\mu$m using a spheroidizing device.

The secondary particles and pitch carbon were mixed in a weight ratio of 93:7 based on a total of 100 parts by weight, and the mixture was subjected to compression molding through CIP at a pressure of 80 MPa.

Subsequently, a negative electrode active material was prepared by thermally treating the obtained compression-molded product under an $N_2$ atmosphere at a maximum temperature of 1100 to 1300 °C in a furnace for 16 hours.

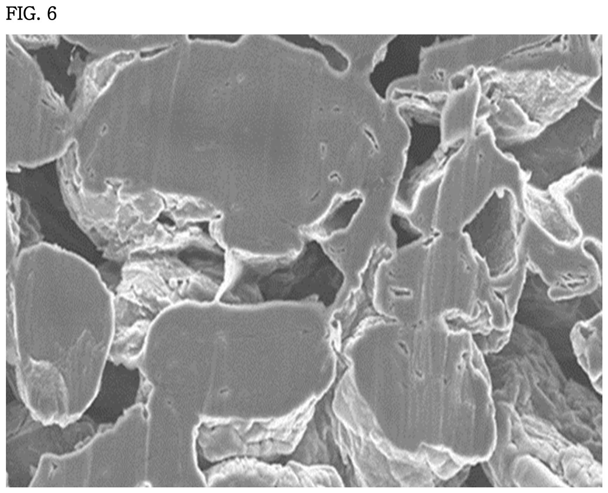

The SEM image of the prepared negative electrode active material is shown in FIG. 6. As shown in FIG. 6, it can be confirmed that the negative electrode active material is densified.

The sphericity of the prepared negative electrode active material is 0.9. The sphericity was measured using a sphericity analyzer such as Morphologi 4 (Malvern). For the prepared negative electrode active material, the A and B values in Equation 2 were obtained and then calculated according to Equation 2.

(2) 98.5 wt% of the prepared negative electrode active material, and 1.5 wt% of a mixture of PTFE and PVDF as a binder were put into a blender without a solvent, and mixed at 10,000 rpm for 1 minute, thereby obtaining a mixture. After a mixture mass was obtained by putting the acquired mixture into a kneader and kneading it at 110 °C and a speed of 60 rpm for 5 minutes, the mixture mass was put into a blender and ground at 10,000 rpm for 40 seconds, thereby obtaining an electrode powder. Afterward, the electrode powder was repeatedly compressed using a calender roll (roll diameter: 200 mm, roll temperature: 80 °C), thereby obtaining a negative electrode active material layer (thickness: 150 μm).

The prepared negative electrode active material layer was laminated onto a copper foil and roll-pressed, thereby manufacturing a dry negative electrode plate.

A half-cell was manufactured using the dry negative electrode plate, a lithium metal counter electrode, and an electrolyte. The electrolyte was a mixed solvent of ethylene carbonate and dimethyl carbonate (3:7 volume ratio) in which 1 M $LiPF_6$ was dissolved.

**Example 2**

A dry negative electrode plate and half cell were manufactured in substantially the same manner as in Example 1 using a negative electrode active material, except that a major axis length of the primary particles was changed to 5 μm in the preparation of a negative electrode active material.

**Example 3**

A dry negative electrode plate and half cell were manufactured in substantially the same manner as in Example 1 using a negative electrode active material, except that the secondary particles and pitch carbon were mixed in a weight ratio of 95:5 based on a total of 100 parts by weight in Example 1.

**Comparative Example 1**

A flaky natural graphite raw material with an average particle diameter (D50) 120 μm was ground into primary particles with a major axis length of 20 μm using a jet milling method. The primary particles were assembled into secondary particles with an average particle diameter (D50) 15 μm using a spheroidizing device.

The secondary particles and pitch carbon were mixed in a weight ratio of 93:7 based on a total of 100 parts by weight and thermally heated at 1100 to 1300 °C in a kiln for 16 hours, thereby preparing a negative electrode active material.

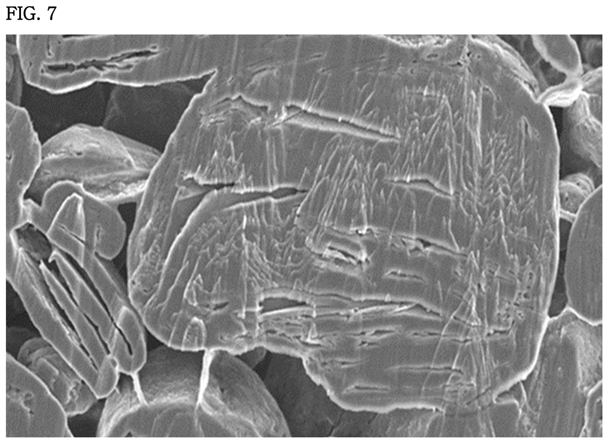

The SEM image of the prepared negative electrode active material is shown in FIG. 7. As shown in FIG. 7, compared to FIG. 6, it is confirmed that a relatively large number of pores are observed.

A dry negative electrode plate and half cell were manufactured in substantially the same manner as in Example 1 using the prepared negative electrode active material.

**Comparative Example 2**

A negative electrode active material and half cell were prepared in substantially the same manner as in Comparative Example 1, except that the natural graphite raw material was ground into primary particles with a major axis length of 17 μm rather than that in Comparative Example 1, and a dry negative electrode plate was manufactured in substantially the same manner as in Example 1 using the prepared negative electrode active material.

**Comparative Example 3**

A negative electrode active material and half cell were prepared in substantially the same manner as in Comparative Example 1, except for changing the weight ratio of the secondary particles and the pitch carbon to 95:5 based on a total of 100 parts by weight rather than that in Comparative Example 1, and a dry negative electrode plate was manufactured in substantially the same manner as in Example 1 using the prepared negative electrode active material.

**Comparative Example 4**

A negative electrode active material and half cell were prepared in substantially the same manner as in Comparative Example 1, except for changing the weight ratio of the secondary particles and the pitch carbon to 97:3 based on a total of 100 parts by weight rather than that in Comparative Example 1, and a dry negative electrode plate was manufactured in substantially the same manner as in Example 1 using the prepared negative electrode active material.

**Experimental Example 1: Evaluation of negative electrode active material**

**Volume ratio (units: %):**

A volume ratio was measured by MIP. The volume ratio was measured for each of the negative electrode active materials of Examples and Comparative Examples using a Hg intrusion porosimeter (AutoPore V (Micromeritics)). Each of the negative electrode active materials was put into a special sample cup, and the cup was surrounded with mercury. After applying a pressure of 0.2 to 60,000 psi to intrude mercury into the negative electrode active material, the cumulative pore volume at 0.1 $\mu$m to 1 $\mu$m was determined by measuring the volume change of the mercury, and the volume ratio was calculated by dividing resulting value by a total pore volume determined by the apparent density of each of the negative electrode active materials and the true density of graphite (about 2.2 g/cc).

**Orientation ratio:**

Orientation ratios were measured using X'Pert Pro (PANalytical) as an XRD analyzer. Each of the negative electrode active materials of Examples and Comparative Examples was compressed into 1.65 g/cc of pellets by applying pressure, and a ratio of the diffraction peak intensity I (002) of the (002) plane to the diffraction peak intensity I (110) of the (110) plane was obtained through an XRD diffraction analysis method using CuK$\alpha$ radiation.

**Specific surface area (units: $m^2$/g):**

The BET specific surface area of each of the negative electrode active materials of Examples and Comparative Examples was able to be measured using Macsorb HM Model-1208 (MOUNTECH).

**Experimental Example 2: Evaluation of battery**

**Charge capacity, discharge capacity (units: mAh/g), and initial efficiency (units: %)**

In a range of 2.5V to 4.2V, the manufactured half-cell was charged and discharged once at 0.1C and then charged and discharged once at 0.2C, followed by being charged and discharged 500 times at 1C. Charging and discharging methods and cut-off conditions were as follows.

   Charging: constant current-constant voltage, 4.2 V/0.01C cut-off
   Discharging: constant voltage, 2.5 V cut-off

The initial efficiency was evaluated by the ratio of discharge capacity to charge capacity.
The results measured with each of the dry negative electrodes of Examples and Comparative Examples are as follows.

Table 1

|  | Volume ratio | Orientation ratio | Specific surface area | Charge capacity | Discharge capacity | Initial efficiency |
|---|---|---|---|---|---|---|
| Comparative Example 1 | 4 | 130 | 6.5 | 405 | 353 | 87.2 |
| Comparative Example 2 | 4.5 | 120 | 7.1 | 406 | 351 | 86.4 |
| Comparative Example 3 | 5 | 125 | 5.8 | 397 | 350 | 88.2 |
| Comparative Example 4 | 5 | 130 | 4.4 | 400 | 353 | 88.3 |

(continued)

|  | Volume ratio | Orientation ratio | Specific surface area | Charge capacity | Discharge capacity | Initial efficiency |
|---|---|---|---|---|---|---|
| Example 1 | 2 | 80 | 2.7 | 388 | 355 | 91.5 |
| Example 2 | 1.8 | 75 | 2.6 | 387 | 355 | 91.7 |
| Example 3 | 2.2 | 70 | 3 | 390 | 356 | 91.3 |

As shown in Table 1, the dry negative electrode plates for a rechargeable lithium battery of Examples each included the negative electrode active material that was free from cracking, crumbling and damage in the manufacture of the dry electrode plate, so they each exhibited high initial efficiency.

However, as shown in Table 1, the dry negative electrodes of Comparative Examples that did not satisfy the volume ratio and orientation ratio described above each exhibited lower initial efficiency than those of Examples.

**Example 4**

**(1) Preparation of first negative electrode active material**

A flaky natural graphite raw material with an average particle diameter (D50) 120 $\mu$m was ground into primary particles with a major axis length of 6 $\mu$m using a jet milling method. The primary particles were assembled into secondary particles with an average particle diameter (D50) 15 $\mu$m using a spheroidizing device.

The secondary particles and pitch carbon were mixed in a weight ratio of 93:7 based on a total of 100 parts by weight thereof, and this mixture was subjected to compression molding by CIP under a pressure of 70 to 80 MPa.

Subsequently, the obtained compression-molded product was thermally treated in an $N_2$ atmosphere at 1250 °C in a kiln for 16 hours, thereby preparing a first negative electrode active material.

**(2) Preparation of second negative electrode active material**

Silicon nanoparticles with an average particle diameter (D50) of 100 nm were prepared by grinding silicon particles. The silicon nanoparticles were flaky, and their width/thickness ratio was 20. In addition, the full width at half maximum (FWHM)(111) of the diffraction peak on the (111) plane of the silicon nanoparticles as measured by X-ray diffraction using CuK$\alpha$ radiation was 1.11°. A 15 wt% silicon particle solution was prepared by adding the prepared silicon nanoparticles to an isopropyl alcohol solvent. Secondary particles with an average particle diameter (D50) of 6 $\mu$m, in which primary silicon nanoparticles with an average particle diameter (D50) of 100 nm were assembled, were prepared by spray-drying the prepared silicon particle solution at 120 °C using a two-fluid nozzle while flowing $N_2$ at a flow rate of 50 L/min.

After mixing 60 wt% of the prepared secondary particles and 40 wt% of petroleum pitch, the mixture was subjected to compression molding under a pressure of 20 MPa for 3 minutes.

A second negative electrode active material was prepared by thermally treating the obtained compression-molded product at 1000 °C in a $N_2$ atmosphere.

The prepared second negative electrode active material includes secondary particles with an average particle diameter (D50) of 6 $\mu$m, in which primary silicon nanoparticles with an average particle diameter (D50) of 100 nm were assembled, a soft amorphous carbon coating layer coated on the surface of the secondary particle and located on the outside, and soft amorphous carbon filled between the primary particles. The content (e.g., amount) of the silicon nanoparticles, that is, secondary particles, was 60 wt% with respect to a total weight of 100 wt% of the second negative electrode active material, and the content (e.g., amount) of the amorphous carbon was 40 wt% with respect to the total weight of 100 wt% of the second negative electrode active material. In addition, the thickness of the amorphous carbon coating layer coated on the surface of the secondary particle was 30 nm. The BET specific surface area of the prepared second negative electrode active material was 1.8 m$^2$/g.

**(3) Manufacture of dry negative electrode plate**

A negative electrode active material mixture was prepared by mixing 50 parts by weight of the prepared first negative electrode active material and 50 parts by weight of the prepared second negative electrode active material.

A mixture was obtained by putting 98.5 wt% of the prepared negative electrode active material mixture and 1.5 wt% of the mixture of PTFE and PVDF as a binder into a blender without a solvent, and mixing the resulting product at 10,000 rpm for 1 minute. After a mixture mass was obtained by putting the obtained mixture into a kneader and kneading it at 110 °C and a speed of 60 rpm for 5 minutes, the mixture mass was put into a blender, ground at 10,000 rpm for 40 seconds, thereby obtaining an electrode powder. Afterward, the electrode powder was repeatedly compressed using a calender roll (roll diameter: 200 mm, roll temperature: 80 °C), thereby obtaining an active material layer (thickness: 150 $\mu$m).

The active material layer was laminated onto a copper foil and rolled, thereby manufacturing a dry negative electrode plate.

The dry negative electrode plate, a lithium metal counter electrode, and an electrolyte were used to manufacture a half-cell. The electrolyte was a mixed solvent of ethylene carbonate and dimethyl carbonate (3:7 volume ratio) in which 1 M LiPF$_6$ was dissolved.

**Example 5**

A first negative electrode active material was prepared in substantially the same manner as in Example 4, except that the flaky graphite was ground into primary particles with a major axis length of 13 $\mu$m rather than that in Example 4.

A second negative electrode active material was prepared in substantially the same manner as in Example 4, except for changing the secondary particles to 58% and the amorphous carbon to 42 wt% rather than that in Example 4.

Using the prepared first negative electrode active material and second negative electrode active material, a dry negative electrode plate and half cell were manufactured in substantially the same manner as in Example 4.

**Example 6**

A first negative electrode active material was prepared in substantially the same manner as in Example 4, except for changing the weight ratio of the secondary particles and the pitch carbon to 94:6 rather than that in Example 4, and a dry negative electrode plate and half cell were manufactured in substantially the same manner as in Example 4 using the prepared first negative electrode active material.

**Comparative Example 5**

A flaky natural graphite raw material with an average particle diameter (D50) 120 $\mu$m was ground into primary particles with a major axis length of 6 $\mu$m using a jet milling method. The primary particles were assembled into secondary particles with an average particle diameter (D50) 15 $\mu$m using a spheroidizing device.

The secondary particles and pitch carbon were mixed in a weight ratio of 93:7 based on a total weight of 100 parts by weight, and thermally treated in a N$_2$ atmosphere at 1250 °C in a kiln for 16 hours, thereby preparing a first negative electrode active material.

An SEM image of the prepared first negative electrode active material confirmed that a relatively large number of pores were observed.

A dry negative electrode plate and half cell were manufactured in substantially the same manner as in Example 4 using the prepared first negative electrode active material.

**Comparative Example 6**

A first negative electrode active material and half cell were prepared in substantially the same manner as in Comparative Example 5, except for changing the average particle diameter (D50) of the secondary particles to 16 $\mu$m rather than that in Comparative Example 5, and a dry negative electrode plate was manufactured in substantially the same manner as in Comparative Example 5 using the prepared first negative electrode active material.

**Comparative Example 7**

A first negative electrode active material and half cell were prepared in substantially the same manner as in Comparative Example 5, except for changing the weight ratio of the secondary particles and the pitch carbon to 92:8 based on a total weight of 100 parts by weight rather than that in Comparative Example 5, and a dry negative electrode plate was manufactured in substantially the same manner as in Comparative Example 5 using the prepared first negative electrode active material.

**Comparative Example 8**

A first negative electrode active material and half cell were prepared in substantially the same manner as in Example 5, except for changing the pressure in the compression process during the preparation of the first negative electrode active material to 20 MPa rather than that in Example 5, and a dry negative electrode plate was manufactured in substantially the same manner as in Example 5 using the prepared first negative electrode active material.

**Experimental Example 3: Evaluation of first negative electrode active material**

**Volume ratio (units: %):**

A volume ratio was measured by MIP. The volume ratio was measured for each of the negative electrode active materials of Examples and Comparative Examples using a Hg intrusion porosimeter (AutoPore V (Micromeritics)). Each of the negative electrode active materials was put into a special sample cup, and the cup was surrounded with mercury. After applying a pressure of 0.2 to 60,000 psi to intrude mercury into the negative electrode active material, the cumulative pore volume at 0.1 $\mu$m to 1 $\mu$m was determined by measuring the volume change of the mercury, and the volume ratio was calculated by dividing resulting value by a total pore volume determined by the apparent density of each of the first negative electrode active materials and the true density of graphite (about 2.2 g/cc).

**Orientation ratio:**

Orientation ratios were measured using X'Pert Pro (PANalytical) as an XRD analyzer. Each of the negative electrode active materials of Examples and Comparative Examples was compressed into 1.65 g/cc of pellets by applying pressure, and a ratio of the diffraction peak intensity I (002) of the (002) plane to the diffraction peak intensity I (110) of the (110) plane was obtained through an XRD diffraction analysis method using CuK$\alpha$ radiation.

**Sphericity:**

A sphericity was measured using a sphericity analyzer such as Morphologi 4 (Malvern). For each of the first prepared negative electrode active materials of Examples and Comparative Examples, the A and B values in Equation 2 were obtained and then calculated according to Equation 2.

**Specific surface area (units: m$^2$/g):**

The BET specific surface area of each of the first negative electrode active materials of Examples and Comparative Examples was measured using Macsorb HM Model-1208 (MOUNTECH).

**Experimental Example 4: Evaluation of second negative electrode active material**

**Internal pore fraction by BJH method (units: %)**

BJH measurement was performed, using a BJH (model name: ASAP 2460, manufacturer: Micromeritics) analysis instrument, by measuring the amount of adsorption and desorption of a sample corresponding to the changes in pressure using nitrogen at the liquid nitrogen temperature (-198 °C) from 0 mmHg to 950 mmHg. Using the BJH instrument, the volume of pores with a diameter of 200 nm or less was measured after nitrogen adsorption at a relative pressure (0.14) of 0.01 to 0.995, followed by nitrogen desorption. The pore fraction was then calculated by dividing this volume by a total pore volume determined by the apparent density of each of the second negative electrode active materials and the true density (2.1 g/cc) of silicon. For example, the internal pore fraction (%) is calculated as (BJH open-pore volume in the specified size range)/(BJH total open-pore volume) $\times$ 100%.

**Specific surface area (units: m$^2$/g)**

The specific surface areas of each of the negative electrode active materials of Examples and Comparative Examples were measured using Macsorb HM Model-1208 (MOUNTECH).

**Experimental Example 5: Evaluation of battery**

**Charge capacity, discharge capacity (units: mAh/g), and initial efficiency (units: %)**

In a range of 2.5V to 4.2V, the manufactured half-cell was charged and discharged once at 0.1C and then charged and discharged once at 0.2C, followed by being charged and discharged 500 times at 1C. Charging and discharging methods and cut-off conditions were as follows.

Charging: constant current-constant voltage, 4.2 V/0.01C cut-off
Discharging: constant voltage, 2.5 V cut-off

The results measured with each of the dry negative electrodes of Examples and Comparative Examples are as follows.

Table 2

| | First negative electrode active material | | | | Second negative electrode active material | | Charge capacity | Discharge capacity | Initial efficiency |
|---|---|---|---|---|---|---|---|---|---|
| | Volume ratio | Orientation ratio | Sphericity | Specific surface area | BJH internal pore fraction | Specific surface area | | | |
| Comparative Example5 | 6.5 | 130 | 0.8 | 3.2 | 0.8 | 1.8 | 580 | 495 | 85 |
| Comparative Example6 | 7.1 | 120 | 0.85 | 3.5 | 0.8 | 1.8 | 585 | 490 | 84 |
| Comparative Example7 | 5.8 | 125 | 0.86 | 2.8 | 0.8 | 1.8 | 585 | 495 | 85 |
| Comparative Example8 | 4.5 | 88 | 0.89 | 2.2 | 0.8 | 1.8 | 580 | 481 | 83 |
| Example 4 | 1.8 | 80 | 0.90 | 1.8 | 0.8 | 1.8 | 559 | 501 | 90 |
| Example 5 | 1.7 | 75 | 0.92 | 1.6 | 0.6 | 1.4 | 554 | 502 | 91 |
| Example 6 | 2 | 85 | 0.90 | 2.2 | 0.8 | 1.8 | 557 | 499 | 90 |

As shown in Table 2, the negative electrodes for a rechargeable lithium battery of Examples each exhibited high battery efficiency.

**Example 7**

**(1) Preparation of first negative electrode active material**

A flaky natural graphite raw material with an average particle diameter (D50) 120 $\mu$m was ground into primary particles with a major axis length of 6 $\mu$m using a jet milling method. The primary particles were assembled into secondary particles with an average particle diameter (D50) 15 $\mu$m using a spheroidizing device.
The secondary particles and pitch carbon were mixed in a weight ratio of 93:7 based on a total of 100 parts by weight, and this mixture was subjected to compression molding by CIP under a pressure of 80 MPa.
Subsequently, the obtained compression-molded product was thermally treated in an $N_2$ atmosphere at a maximum temperature of 1250 °C in a kiln for 16 hours, thereby preparing a first negative electrode active material.
The SEM image of the prepared negative electrode active material is shown in FIG. 6 (Example 7 and Example 1 are the same). As shown in FIG. 6, it can be confirmed that the negative electrode active material is densified.

**(2) Preparation of second negative electrode active material**

Primary particles with an average particle diameter of 100 nm were prepared by ball-milling silicon particles with an average particle diameter (D50) of 8 $\mu$m. The primary particles and stearic acid were mixed in a weight ratio of 20:80, and the obtained mixture was spray-dried, thereby preparing secondary particles having an average particle diameter

(D50) of 7 $\mu$m and pores.

The prepared secondary particles and petroleum pitch were mixed in a weight ratio of 60:40 based on a total weight of 100 parts by weight, and this mixture was subjected to a compression molding process by CIP under a pressure of 10 MPa. Subsequently, the obtained compression-molded product was carbonized in an $N_2$ atmosphere at a temperature of 1000 °C.

Subsequently, a second negative electrode active material, which is a silicon-carbon composite that includes secondary particles with an average particle diameter of 7 $\mu$m, in which silicon primary particles with an average particle diameter of 100 nm were assembled and a soft carbon coating layer coating the secondary particle, was prepared by classifying the carbonized product using a sieve to have a span value of 1.1, as calculated by Equation 3, wherein the second negative electrode active material was coated with 30 nm-thick soft carbon. Here, based on a total weight of the second negative electrode active material, the content (e.g., amount) of the silicon nanoparticles was 60 wt%, and the content (e.g., amount) of the soft carbon was 40 wt%. In addition, the D10, D50, and D90 of the second negative electrode active material were measured using a particle size analyzer (product name: LS 13 320, manufacturer: Beckman Coulter). The span value obtained from these values according to Equation 3 was 1.1.

## Equation 3

$$\text{Span} = (D90-D10)/D50$$

In addition, the sphericity was 0.95, obtained by analyzing the cross-sectional image obtained by CP-SEM using the Image J program.

In addition, the total pore volume and mesopore volume of the prepared second negative electrode active material were measured using an BJH analysis instrument. BJH measurement was performed, using a BJH (model name: ASAP 2460, manufacturer: Micromeritics) analysis instrument, by measuring the amount of adsorption and desorption of a sample corresponding to the changes in pressure using nitrogen at the liquid nitrogen temperature (-198 °C) from 0 mmHg to 950 mmHg. The total pore volume obtained by BJH measurement was 0.007 cm$^3$/g, and the ratio of the mesopore volume to the total pore volume ((mesopore volume/total pore volume)*100) was 68%.

### (3) Manufacture of dry negative electrode plate

A negative electrode active material mixture was prepared by mixing 50 parts by weight of the prepared first negative electrode active material and 50 parts by weight of the prepared second negative electrode active material.

A mixture was obtained by putting 98.5 wt% of the prepared negative electrode active material mixture, 1.5 wt% of a mixture of PTFE and PVDF as a binder into a blender without a solvent, and mixing the resulting product at 10,000 rpm for 1 minute. After a mixture mass was obtained by putting the resulting mixture into a kneader and kneading it at 110 °C and a speed of 60 rpm for 5 minutes, the mixture mass was put into a blender and ground at 10,000 rpm for 40 seconds, thereby obtaining an electrode powder. Afterward, the electrode powder was repeatedly compressed using a calender roll (roll diameter: 200mm, roll temperature: 80 °C), thereby obtaining an active material layer (thickness: 120 $\mu$m).

The active material layer was laminated onto a copper current collector and rolled, thereby manufacturing a dry negative electrode plate.

A half-cell was manufactured using the dry negative electrode plate, a lithium metal counter electrode, and an electrolyte. The electrolyte was a mixed solvent of ethylene carbonate and dimethyl carbonate (3:7 volume ratio) in which 1 M LiPF$_6$ was dissolved.

### Example 8

A first negative electrode active material was prepared in substantially the same manner as in Example 7, except for using primary particles with a major axis length of 5 $\mu$m in the preparation of a first negative electrode active material in Example 7.

A second negative electrode active material was prepared in substantially the same manner as in Example 7, except that the mixture in which secondary particles and petroleum pitch were mixed in a weight ratio of 60:40 was subjected to compression molding through CIP under a pressure of 8 MPa rather than that in Example 7.

A dry negative electrode plate and a half-cell were manufactured in substantially the same manner as in Example 7 using the prepared first negative electrode active material and second negative electrode active material.

### Example 9

A dry negative electrode and half cell were manufactured in substantially the same manner as in Example 7 using a first negative electrode active material prepared in substantially the same manner as in Example 7, except that secondary particles and pitch carbon were mixed in a weight ratio of 95:5 based on a total of 100 parts by weight rather than that in Example 7.

**Comparative Example 9**

A flaky natural graphite raw material with an average particle diameter (D50) 120 $\mu$m was ground into primary particles with a major axis length of 20 $\mu$m using a jet milling method. The primary particles were assembled into secondary particles with an average particle diameter (D50) 15 $\mu$m using a spheroidizing device.

The secondary particles and pitch carbon were mixed in a weight ratio of 93:7 based on a total of 100 parts by weight and thermally heated at 1100 to 1300 °C in a kiln for 16 hours, thereby preparing a first negative electrode active material.

The SEM image of the prepared first negative electrode active material is shown in FIG. 7 (Comparative Example 9 and Comparative Example 1 are the same). As shown in FIG. 7, compared to FIG. 6, it was confirmed that a relatively large number of pores are observed.

A dry negative electrode plate and half cell were manufactured in substantially the same manner as in Example 7 using the prepared first negative electrode active material.

**Comparative Example 10**

A first negative electrode active material was prepared in substantially the same manner as in Comparative Example 9, except that the natural graphite raw material was ground into primary particles with a major axis length of 17 $\mu$m rather than that in Comparative Example 9, and a dry negative electrode and half cell were manufactured in substantially the same manner as in Example 7 using the prepared first negative electrode active material.

**Comparative Example 11**

A first negative electrode active material and half cell were prepared in substantially the same manner as in Comparative Example 9, except for changing the weight ratio of the secondary particles and the pitch carbon to 95:5 based on a total of 100 parts by weight rather than that in Comparative Example 9, and a dry negative electrode was manufactured in substantially the same manner as in Example 7 using the prepared first negative electrode active material.

**Comparative Example 12**

A first negative electrode active material and half cell were prepared in substantially the same manner as in Comparative Example 9, except for changing the weight ratio of the secondary particles and the pitch carbon to 97:3 based on a total of 100 parts by weight rather than that in Comparative Example 9, and a dry negative electrode was manufactured in substantially the same manner as in Example 7 using the prepared first negative electrode active material.

**Experimental Example 6: Evaluation of first negative electrode active material**

**Volume ratio (units: %):**

A volume ratio was measured by MIP. The volume ratio was measured for each of the negative electrode active materials of Examples and Comparative Examples using a Hg intrusion porosimeter (AutoPore V (Micromeritics)). Each of the negative electrode active materials was put into a special sample cup, and the cup was surrounded with mercury. After applying a pressure of 0.2 to 60,000 psi to intrude mercury into the negative electrode active material, the cumulative pore volume at 0.1 $\mu$m to 1 $\mu$m was determined by measuring the volume change of the mercury, and the volume ratio was calculated by dividing resulting value by a total pore volume determined by the apparent density of each of the first negative electrode active materials and the true density of graphite (about 2.2 g/cc).

**Orientation ratio:**

Orientation ratios were measured using X'Pert Pro (PANalytical) as an XRD analyzer. Each of the negative electrode active materials of Examples and Comparative Examples was compressed into 1.65 g/cc of pellets by applying pressure, and a ratio of the diffraction peak intensity I (002) of the (002) plane with respect to the diffraction peak intensity I (110) of the (110) plane was obtained through an XRD diffraction analysis method using CuKα radiation.

**Sphericity:**

A sphericity was measured using a sphericity analyzer such as Morphologi 4 (Malvern). For each of the prepared first negative electrode active materials of Examples and Comparative Examples, the A and B values in Equation 2 were obtained and then calculated according to Equation 2.

**Specific surface area (units:$m^2$/g):**

The BET specific surface area of each of the negative electrode active materials of Examples and Comparative Examples was measured using Macsorb HM Model-1208 (MOUNTECH).

**Experimental Example 7: Evaluation of second negative electrode active material**

**Sphericity:**

A sphericity was measured using a sphericity analyzer such as Morphologi 4 (Malvern). For each of the prepared second negative electrode active materials of Examples and Comparative Examples, the A and B values in Equation 2 were obtained and then calculated according to Equation 2.

**Aspect ratio**

An aspect ratio was measured using the sphericity analyzer, and refers to the ratio of the longest major axis length to the shortest minor axis length of the negative electrode active material.

**D50 (units: μm)**

D50 was measured by a particle size analyzer (Beckman Coulter/LS 13 320) using a mixture of DI water and a negative electrode active material. The diameter of particles with a cumulative volume of 50 vol% in the particle size distribution was adopted.

**Tap density (units: g/cc)**

A conversion factor for a second negative electrode active material was 0.2907 $cm^3$/mm, and a tap density was obtained by calculating an average value by performing a process of applying a pressure of 108 N three times using a GeoPyc 1360 pycnometer (Micromeritics) having a chamber with a diameter of 19.1 mm.

**Experimental Example 8: Evaluation of battery**

**Charge capacity, discharge capacity (units: mAh/g), and initial efficiency (units: %)**

In a range of 2.5V to 4.2V, the manufactured half-cell was charged and discharged once at 0.1C and then charged and discharged once at 0.2C, followed by being charged and discharged 500 times at 1C. Charging and discharging methods and cut-off conditions were as follows.

Charging: constant current-constant voltage, 4.2 V/0.01C cut-off
Discharging: constant voltage, 2.5 V cut-off

Charge capacity and discharge capacity were measured, and the initial efficiency was evaluated by the ratio of discharge capacity to charge capacity.
Spring-back (units: none) was obtained by calculating a ratio of the thickness of an electrode plate after rolling to the thickness of the electrode plate before rolling. The lower the spring-back, the better.

Table 3

| | First negative electrode active material | | | | Second negative electrode active material | | | | Charge cap acity | Disc harg e capa city | Initial effic iency | Spring -back |
|---|---|---|---|---|---|---|---|---|---|---|---|---|
| | Volume ratio | Orient ation ratio | Sphericity | Specific surface area | Sphericity | Aspect ratio | D50 | Tap den sity | | | | |
| Comparative Example 19 | 6.5 | 130 | 0.8 | 3.2 | 0.95 | 0.87 | 7 | 1.09 | 580 | 495 | 85 | 0.98 |
| Compa rative Exampl 5 e 10 | 7.1 | 120 | 0.85 | 3.5 | 0.95 | 0.87 | 7 | 1.0 9 | 585 | 490 | 84 | 0.99 |
| Compa rative Exampl 10 e 11 | 5.8 | 125 | 0.86 | 2.8 | 0.95 | 0.87 | 7 | 1.0 9 | 585 | 495 | 85 | 1 |
| Compa rative Exampl 15 e 12 | 4.5 | 88 | 0.89 | 2.2 | 0.95 | 0.87 | 7 | 1.0 9 | 580 | 496 | 86 | 1.03 |
| Exampl e 7 | 1.8 | 80 | 0.9 | 1.8 | 0.95 | 0.87 | 7 | 1.0 9 | 559 | 501 | 90 | 0.6 |
| Exampl 20 e 8 | 1.7 | 75 | 0.92 | 1.6 | 0.94 | 0.86 | 7. 5 | 1.1 2 | 554 | 502 | 91 | 0.6 |
| Exampl e 9 | 2 | 85 | 0.90 | 2.2 | 0.95 | 0.87 | 7 | 1.0 9 | 557 | 499 | 90 | 0.7 |

As shown in Table 3, the negative electrodes for a rechargeable lithium battery of Examples each include a negative electrode active material that is free from cracking, crumbling and damage during the preparation of a negative electrode active material layer, thereby exhibiting no reduction in battery efficiency. The negative electrodes of Examples were each manufactured with rolling under low pressure due to less spring-back, thereby eliminating the need for high-pressure rolling, and thus preventing or reducing a decrease in battery efficiency. The negative electrodes of Examples each exhibited excellent or suitable expansion and lifespan characteristics.

As used herein, the term "Group" as utilized herein refers to a group of the Periodic Table of Elements according to the 1 to 18 grouping system of the International Union of Pure and Applied Chemistry ("IUPAC").

In the present disclosure, it will be understood that the term "comprise(s)/comprising," "include(s)/including," or "have/has/having" specifies the presence of stated features, integers, steps, operations, elements, and/or components, but do not preclude the presence or addition of one or more other features, integers, steps, operations, elements, components, and/or groups thereof. Additionally, the terms "comprise(s)/comprising," "include(s)/including," "have/has/having", or other similar terms include or support the terms "consisting of" and "consisting essentially of," indicating the presence of stated features, integers, steps, operations, elements, and/or components, without or essentially without the presence of other features, integers, steps, operations, elements, components, and/or groups thereof.

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within $\pm$ 30%, $\pm$ 20%, $\pm$ 10%, or $\pm$ 5% of the stated value. Also, it should be understood that, even if the terms "about," "approximately," or "substantially" are not expressly recited in a given element (e.g., a claim element), the scope of such element is intended to include variations that are insubstantial or within the understanding of one of ordinary skill in the art. For example, numerical values and ranges provided herein are intended to include tolerances and measurement uncertainties that would be recognized by those skilled in the art, and the elements (e.g., claim elements) should be construed accordingly to encompass such equivalents.

In the context of the present disclosure and unless otherwise defined, the terms "use," "using," and "used" may be considered synonymous with the terms "utilize," "utilizing," and "utilized," respectively.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

An electrode active material manufacturing apparatus, a battery manufacturing device, a battery pack, a battery management system (BMS) device, and/or any other relevant devices or components according to embodiments of the present disclosure described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

**Claims**

1.  A negative electrode active material, comprising:

    spherical graphite; and
    an amorphous carbon layer around the spherical graphite,
    wherein the negative electrode active material has a volume ratio of a total volume of pores with a diameter of 100 nm to 1000 nm to a total pore volume of 3% or less and an orientation ratio of 90 or less, and
    wherein the negative electrode active material is a negative electrode active material for a rechargeable lithium battery.

2.  The negative electrode active material according to claim 1, wherein the total pore volume is a total volume of total pores, the total pores being open pores comprised in the negative electrode active material, and each having a diameter in a range of 10 nm to 6000 nm, and
    wherein the pores with a diameter of 100 nm to 1000 nm are open pores with a diameter of 100 nm to 1000 nm in the negative electrode active material.

3.  The negative electrode active material according to claim 1 or 2, wherein the total pore volume is 0.5 mL/g or less, and the total volume of the pores with a diameter of 100 nm to 1000 nm is 0.015 mL/g or less.

4.  The negative electrode active material according to any of claims 1 to 3, wherein the negative electrode active material has a sphericity (S) of 0.8 to 1.0, as expressed by Equation 2:

    Equation 2

    $$\text{Sphericity (S)} = 4\pi \times A/B^2,$$

    In Equation 2,
    A being a projected area of the negative-electrode active-material particle, and
    B being a projected perimeter of the negative-electrode active-material particle.

5.  The negative electrode active material according to any of claims 1 to 4, wherein the spherical graphite comprises natural graphite and/or the spherical graphite comprises secondary particles in each of which a plurality of primary particles of natural graphite are assembled, and
    wherein some of spaces surrounded by the primary particles of the negative electrode active material are filled with amorphous carbon.

6.  The negative electrode active material as claimed in claim 5, wherein the primary particles have an average particle diameter (D50) in a range of 1 $\mu$m to 15 $\mu$m, and the secondary particles have an average particle diameter (D50) in a range of 5 $\mu$m to 30 $\mu$m.

7.  The negative electrode active material according to any of claims 1 to 6, wherein the amorphous carbon layer has a thickness of 1 nm to 2 $\mu$m and/or the spherical graphite and amorphous carbon in the negative electrode active material are in a weight ratio of 90 : 10 to 99 : 1 based on a total of 100 parts by weight and/or the negative electrode active material has a specific surface area of 3 m$^2$/g or less.

8.  A negative electrode (20), comprising a negative electrode active material layer comprising a first negative electrode active material,
    wherein the first negative electrode active material comprises the negative electrode active material as claimed in claim 1.

9.  The negative electrode (20) as claimed in claim 8, wherein the negative electrode active material layer further comprises a binder, and
    wherein the binder comprises one or more selected from among polytetrafluoroethylene and polyvinylidene fluoride, wherein preferably the negative electrode active material layer comprises 80 wt% to 99.5 wt% of the negative electrode active material and 0.5 wt% to 20 wt% of the binder, based on a total weight of 100 wt% of the negative electrode active material layer.

10. The negative electrode (20) according to claim 8 or 9, wherein the negative electrode is a dry negative electrode.

11. The negative electrode (20) according to any of claims 8 to 10, wherein the negative electrode active material layer further comprises a second negative electrode active material, which comprises one or more selected from among (i) and (ii):

(i) a negative electrode active material that comprises silicon nanoparticles and amorphous carbon, and has an internal pore fraction of 1% or less; and
(ii) a negative electrode active material that comprises silicon nanoparticles and an amorphous carbon coating layer on a surface of each of the silicon nanoparticles, and has an aspect ratio of 0.85 or more.

12. The negative electrode (20) according to claim 11, wherein the (i) negative electrode active material has a specific surface area of 10 m$^2$/g or less and a sphericity of 0.7 or more, and
wherein the (i) negative electrode active material comprises secondary particles in each of which the silicon nanoparticles are assembled, wherein preferably the amorphous carbon covers a surface of the secondary particle.

13. The negative electrode (20) according to claim 11 or 12, wherein the (ii) negative electrode active material has a sphericity of 0.9 or more, an average particle diameter (D50) of 5 $\mu$m to 10 $\mu$m, and a tap density of 1.0 g/cc or more.

14. The negative electrode (20) according to any of claims 11 to 13, wherein, in a mixture of the first negative electrode active material and the second negative electrode active material, the first negative electrode active material is comprised at 20 wt% to 80 wt%, and the second negative electrode active material is comprised at 20 wt% to 80 wt%, based on a total weight of 100 wt% of the mixture.

15. A rechargeable lithium battery (100), comprising:

a negative electrode (20) comprising the negative electrode active material as claimed in claim 1; and
a positive electrode (10).

FIG. 1

FIG. 2

FIG. 3

FIG. 4

100

50

72

40

10

30

20

71

FIG. 5

FIG. 6

FIG. 7

Europäisches
Patentamt
European
Patent Office
Office européen
des brevets

## EUROPEAN SEARCH REPORT

**Application Number**

EP 26 15 5992

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 465 381 A1 (SAMSUNG SDI CO LTD [KR]) 20 November 2024 (2024-11-20) * paragraphs [0001], [0010], [0020], [0033] - [0035], [0047], [0060] - [0062], [0118]; figures 2, 3; examples 1-4; tables 1-3 * | 1-15 | INV. H01M4/133 H01M4/36 H01M4/587 H01M4/134 H01M4/38 |
| A | WO 2024/139653 A1 (BTR NEW MAT GROUP CO LTD [CN]; DINGYUAN NEW ENERGY TECH CO LTD [CN]) 4 July 2024 (2024-07-04) * the whole document * -& EP 4 576 251 A1 (BTR NEW MAT GROUP CO LTD [CN]; DINGYUAN NEW ENERGY TECH CO LTD [CN]) 25 June 2025 (2025-06-25) * paragraphs [0001], [0002], [0013], [0020], [0055], [0076], [0077], [0089], [0134] - [0144], [0147]; example 1; table 1 * | 1-15 | |
| A | US 2019/280298 A1 (SAKSHAUG AVERY J [US] ET AL) 12 September 2019 (2019-09-12) * paragraphs [0014], [0036], [0038] - [0041], [0188], [0201] - [0205] * | 1-15 | TECHNICAL FIELDS SEARCHED (IPC) H01M |
| A | EP 4 478 454 A1 (SAMSUNG SDI CO LTD [KR]) 18 December 2024 (2024-12-18) * paragraphs [0012], [0030] - [0033] * | 1-15 | |
| A | EP 4 318 647 A1 (NINGDE AMPEREX TECHNOLOGY LTD [CN]) 7 February 2024 (2024-02-07) * paragraphs [0005], [0032] - [0039], [0094]; figure 1 * | 1-15 | |
| A | CN 113 394 458 A (MITSUBISHI CHEM CORP; MU IONIC SOLUTIONS CORP) 14 September 2021 (2021-09-14) * examples 1-18; tables 43-44 * | 1-15 | |

The present search report has been drawn up for all claims

| Place of search | Date of completion of the search | Examiner |
|---|---|---|
| The Hague | 20 May 2026 | Ferreira Marinha, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 26 15 5992

This annex lists the patent family members relating to the patent documents cited in the above-mentioned European search report.
The members are as contained in the European Patent Office EDP file on
The European Patent Office is in no way liable for these particulars which are merely given for the purpose of information.

20-05-2026

| Patent document cited in search report | | Publication date | Patent family member(s) | | Publication date |
|---|---|---|---|---|---|
| EP 4465381 | A1 | 20-11-2024 | CN | 118943315 A | 12-11-2024 |
| | | | EP | 4465381 A1 | 20-11-2024 |
| | | | KR | 20240163415 A | 19-11-2024 |
| | | | US | 2024379959 A1 | 14-11-2024 |
| WO 2024139653 | A1 | 04-07-2024 | CN | 118263409 A | 28-06-2024 |
| | | | CN | 120019500 A | 16-05-2025 |
| | | | EP | 4576251 A1 | 25-06-2025 |
| | | | US | 2025149565 A1 | 08-05-2025 |
| | | | WO | 2024139653 A1 | 04-07-2024 |
| EP 4576251 | A1 | 25-06-2025 | CN | 118263409 A | 28-06-2024 |
| | | | CN | 120019500 A | 16-05-2025 |
| | | | EP | 4576251 A1 | 25-06-2025 |
| | | | US | 2025149565 A1 | 08-05-2025 |
| | | | WO | 2024139653 A1 | 04-07-2024 |
| US 2019280298 | A1 | 12-09-2019 | CN | 108475779 A | 31-08-2018 |
| | | | CN | 113224274 A | 06-08-2021 |
| | | | CN | 119419246 A | 11-02-2025 |
| | | | EP | 3341990 A1 | 04-07-2018 |
| | | | EP | 3836261 A1 | 16-06-2021 |
| | | | EP | 4286355 A2 | 06-12-2023 |
| | | | EP | 4512791 A2 | 26-02-2025 |
| | | | JP | 7115976 B2 | 09-08-2022 |
| | | | JP | 7458445 B2 | 29-03-2024 |
| | | | JP | 7624539 B2 | 30-01-2025 |
| | | | JP | 7813920 B2 | 13-02-2026 |
| | | | JP | 2018534720 A | 22-11-2018 |
| | | | JP | 2022153561 A | 12-10-2022 |
| | | | JP | 2024073597 A | 29-05-2024 |
| | | | JP | 2025066766 A | 23-04-2025 |
| | | | KR | 20180113187 A | 15-10-2018 |
| | | | KR | 20230091915 A | 23-06-2023 |
| | | | KR | 20230092015 A | 23-06-2023 |
| | | | KR | 20240023451 A | 21-02-2024 |
| | | | KR | 20250080911 A | 05-06-2025 |
| | | | US | 11495798 B1 | 08-11-2022 |
| | | | US | 2017170477 A1 | 15-06-2017 |
| | | | US | 2019280298 A1 | 12-09-2019 |
| | | | US | 2020075954 A1 | 05-03-2020 |
| | | | US | 2020152983 A1 | 14-05-2020 |
| | | | US | 2020365896 A1 | 19-11-2020 |
| | | | US | 2022231296 A1 | 21-07-2022 |
| | | | US | 2023058348 A1 | 23-02-2023 |
| | | | WO | 2017040299 A1 | 09-03-2017 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 26 15 5992

This annex lists the patent family members relating to the patent documents cited in the above-mentioned European search report.
The members are as contained in the European Patent Office EDP file on
The European Patent Office is in no way liable for these particulars which are merely given for the purpose of information.

20-05-2026

| Patent document cited in search report | | Publication date | Patent family member(s) | | Publication date |
|---|---|---|---|---|---|
| EP 4478454 | A1 | 18-12-2024 | EP | 4478454 A1 | 18-12-2024 |
|  |  |  | US | 2024250243 A1 | 25-07-2024 |
| EP 4318647 | A1 | 07-02-2024 | CN | 113078292 A | 06-07-2021 |
|  |  |  | CN | 115425177 A | 02-12-2022 |
|  |  |  | EP | 4318647 A1 | 07-02-2024 |
|  |  |  | JP | 7651711 B2 | 26-03-2025 |
|  |  |  | JP | 2024504446 A | 31-01-2024 |
|  |  |  | US | 2024021775 A1 | 18-01-2024 |
|  |  |  | WO | 2022206175 A1 | 06-10-2022 |
| CN 113394458 | A | 14-09-2021 | CN | 101292389 A | 22-10-2008 |
|  |  |  | CN | 107069091 A | 18-08-2017 |
|  |  |  | CN | 110010850 A | 12-07-2019 |
|  |  |  | CN | 110061283 A | 26-07-2019 |
|  |  |  | CN | 113394458 A | 14-09-2021 |
|  |  |  | CN | 113571772 A | 29-10-2021 |
|  |  |  | CN | 113594543 A | 02-11-2021 |

EPO FORM P0459

For more details about this annex : see Official Journal of the European Patent Office, No. 12/82

page 2 of 2

**EP 4 787 456 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020250013912
- KR 1020250013913
- KR 1020250013914